# EUROPEAN PATENT SPECIFICATION

(11) **EP 3 858 724 B1**
(45) Date of publication and mention of the grant of the patent: **14.02.2024**
(21) Application number: 19867585.2
(22) Date of filing: 25.09.2019
(51) Int. Cl.: B62K 15/00

(54) **MAIN BICYCLE FRAME FOR FOLDABLE BICYCLE AND FOLDABLE BICYCLE**
FAHRRADHAUPTRAHMEN FÜR EIN FALTRAD UND FALTRAD
CADRE PRINCIPAL DE BICYCLETTE POUR BICYCLETTE PLIABLE ET BICYCLETTE PLIABLE

(30) Priority: 26.09.2018 CN 201821584396 U
(43) Date of publication of application: 04.08.2021
(73) Proprietor: Scintr Limited, Kowloon, Hong Kong (CN)
(72) Inventor: WONG, Yui Hong Bernard, Hong Kong (CN); KAI, Po Lun, Hong Kong (CN)
(74) Representative: Isern Patentes y Marcas S.L.
(86) International application number: PCT/CN2019/107836
(87) International publication number: WO 2020/063670

(56) References cited:
- WO-A1-2015/156599
- CN-U- 204 473 013
- US-A1- 2005 285 366

## Description

The present invention was submitted to the Patent Office of the People's Republic of China on September 26, 2018 for the priority of the Chinese patent invention with the invention number of 201821584396.9.

### Technical Field

The present invention relates to the field of bicycles, and in particular to a main frame for a folding bicycle and a folding bicycle.

### Technical Background

Folding bicycles are usually folded through the frame, and by folding the front and rear wheels in half, the volume of the bike can be reduced for easier storage.

Multiple lock buckles need to be removed when folding or unfolding an existing folding bike, which is complex. Document WO2015156599 A1 describes a compact foldable bicycle comprising a steering part, a driving part, and a body part. The document WO 2015/156599 describes a main frame for a folding bicycle in accordance with preamble of claim 1.

### Description of the Invention

In order to solve the above technical problem, a folding bicycle which can be folded simply and quickly and its main frame is provided in the embodiments of the present invention.

In order to solve the above technical problem, the following technical solutions are provided in the embodiments of the present invention:
The present invention relates to a main frame for a folding bicycle, as recited in claim 1. Namely, present invention provide a main frame for folding a bicycle, comprising:
Connecting pipe fitting;
Upper pipe fitting; The upper pipe fitting mentioned is installed on the connecting pipe fitting, and the connecting pipe fitting mentioned can be unfolded or folded relative to the upper pipe fitting mentioned;
Lower pipe fitting; The lower pipe fitting mentioned is installed on the upper pipe fitting mentioned, and the lower pipe fitting mentioned can be unfolded or folded relative to the upper pipe fitting mentioned;
The first hinge lock buckle, which is installed on the upper pipe fitting mentioned; The first hinge lock buckle mentioned is used to lock the connecting pipe fitting mentioned when the connecting pipe fitting mentioned is unfolded relative to the upper pipe fitting mentioned;
The second hinge lock buckle, which is installed on the upper pipe fitting mentioned; The second hinge lock buckle mentioned is used to lock the lower pipe fitting mentioned when the lower pipe fitting mentioned is unfolded relative to the upper pipe fitting mentioned; and
Handle, which is used to connect the first hinge lock buckle mentioned and the second hinge lock buckle mentioned; When the first hinge lock buckle mentioned locks the connecting pipe fitting mentioned and the second hinge lock buckle mentioned locks the lower pipe fitting mentioned, the handle mentioned is used to drive the unlocking of both the first hinge lock buckle mentioned and the second hinge lock buckle mentioned, so that the connecting pipe fitting mentioned and the lower pipe fitting mentioned can be folded relative to the upper pipe fitting mentioned.

According to the invention, the first hinge lock buckle mentioned comprises the first lock buckle transmission piece, the first lock buckle body and the first lock buckle connecting piece. The first lock buckle connecting piece mentioned is connected between the first lock buckle transmission piece mentioned and the first lock buckle body mentioned, the first lock buckle transmission piece mentioned can rotate around the first lock buckle connecting piece mentioned, and the first lock buckle body mentioned can rotate around the first lock buckle connecting piece; The first lock buckle body mentioned is provided with the first limit block;
The connecting pipe fitting is provided with the first accommodating groove. The first accommodating groove mentioned is used for accommodating the first lock body. The bottom of the first accommodating groove mentioned is provided with the first limit groove. When the first hinge lock buckle mentioned is locked, the first limit block is accommodated in the first limit groove.

In some embodiments, the upper pipe fitting mentioned is provided with the second accommodating groove. The first accommodating groove mentioned is connected with the second accommodating groove mentioned. The second accommodating groove mentioned is used for accommodating the first lock buckle transmission element.

According to the invention, the second hinge lock buckle comprises the second lock buckle transmission element, the second lock buckle body and the second lock buckle connecting piece. The second lock buckle connecting piece mentioned is connected between the second lock buckle transmission element mentioned and the second lock buckle body mentioned; the second lock buckle transmission element mentioned can rotate around the second lock buckle connecting piece mentioned, and the second lock buckle body mentioned can rotate around the second lock buckle connecting piece mentioned;
The second lock buckle body is provided with the second limit block;
The lower pipe fitting mentioned is provided with the third accommodating groove.

The third accommodating groove mentioned is used for accommodating the second lock buckle body. The bottom of the third accommodating groove mentioned is provided with the second limit groove. When second hinge lock buckle mentioned is locked, the second limit block mentioned is accommodated in the second limit groove mentioned.

In some embodiments, the upper pipe fitting is provided with the fourth accommodating groove. The third accommodating groove mentioned is connected with the fourth accommodating groove mentioned. The fourth accommodating groove mentioned is used for accommodating the second lock buckle transmission element.

In some embodiments, the upper pipe assembly further includes the first hinge assembly and the second hinge assembly; The first hinge assembly is connected between the connecting pipe fitting mentioned and the upper pipe fitting mentioned, so that the connecting pipe fitting mentioned can rotate relative to the upper pipe fitting mentioned; the second hinge assembly is connected between the lower pipe fitting mentioned and the upper pipe fitting mentioned, so that the lower pipe fitting mentioned can rotate relative to the upper pipe fitting mentioned; and the first hinge assembly mentioned and the second hinge assembly mentioned are respectively located on opposite sides of the upper pipe fitting mentioned. The first hinge lock buckle mentioned and the second hinge lock buckle mentioned are located on opposite sides of the upper pipe fitting mentioned respectively. The first hinge assembly mentioned and the first hinge lock buckle are located on opposite sides of the upper pipe fitting respectively.

In some embodiments, one end of the first hinge assembly mentioned is installed on the connecting pipe fitting mentioned, and the other end of the first hinge assembly mentioned is installed on the upper pipe fitting, so that the first hinge assembly mentioned can rotate relative to the connecting pipe fitting mentioned, and the first hinge assembly mentioned can rotate relative to the upper pipe fitting mentioned.

In some embodiments, the first accommodating groove is provided at the connection between the connecting pipes fitting mentioned and the upper pipe fitting mentioned, and the first accommodating groove mentioned is used for accommodating the first hinge assembly.

In some embodiments, the first hinge assembly comprises the first front axle, the first rear axle, and the first hinge connecting piece. The first front axle mentioned is connected between the connecting pipe fitting mentioned and the first hinge connecting piece mentioned, and the first rear axle is connected between the first hinge connecting piece mentioned and the upper pipe fitting mentioned. The first front axle mentioned is arranged in parallel with the first rear axle, and the distance between the center of the first front axle mentioned and that of the first rear axle mentioned is not less than the depth of the axle center embedded in the connecting pipe fitting mentioned and the upper pipe fitting mentioned.

In some embodiments, one end of the second hinge assembly mentioned is installed on the upper pipe fitting mentioned, and the other end of the second hinge assembly mentioned is installed on the lower pipe fitting mentioned, so that the second hinge assembly mentioned can rotate relative to the upper pipe fitting mentioned, and the second hinge assembly mentioned can rotate relative to the lower pipe fitting mentioned.

In some embodiments, the second accommodating groove is provided at the connection between the upper pipes fitting mentioned and the lower pipe fitting mentioned, and the second accommodating groove mentioned is used to accommodate the second hinge assembly mentioned.

In some embodiments, the second hinge assembly mentioned includes the second front axle, the second rear axle and the second hinge connecting piece. The second front axle mentioned is connected between the upper pipe fitting and the second hinge connecting piece, and the second rear axle mentioned is connected between the second hinge connecting piece mentioned and the lower pipe fitting mentioned. The second front axle mentioned is arranged in parallel with the second rear axle mentioned, and the distance between the center of the second front axle mentioned and that of the second rear axle mentioned is not less than the depth of the axle center embedded in the upper pipe fitting mentioned and the lower pipe fitting mentioned.

In some embodiments, when the folding bicycle mentioned is opened and placed on a horizontal plane, the first front axle mentioned and the first rear axle mentioned are located on a vertical plane, and the second front axle mentioned and the second rear axle mentioned are located on another vertical plane; and the first front axle and the second front axle present a preset angle, so that the axle of the front wheel of the folding bicycle mentioned can be aligned with the axle of the rear wheel.

In some embodiments, the main frame mentioned also comprises the first driving device and the second driving device;
The handle mentioned is respectively connected with the first driving device mentioned and the second driving device mentioned;
The first driving device mentioned is connected with the first hinge lock buckle mentioned;
The second driving device mentioned is connected with the second hinge lock buckle mentioned;
When the handle mentioned is pressed, the first driving device mentioned can be made to drive the unlocking of the first hinge lock buckle mentioned, and the second drive device mentioned can be made to drive the unlocking of the second hinge lock buckle mentioned.

In some embodiments, the first driving device mentioned comprises the first pushing piece and the first connecting rod;
The first pushing piece mentioned comprises a pushing rod and an inclined block;
The pushing rod mentioned is connected with the first hinge lock buckle mentioned, and the first pushing piece mentioned can move along the axis of the pushing rod mentioned;
One end of the first connecting rod mentioned is connected to the handle mentioned, the first connecting rod mentioned is provided with the first connecting rod spring, and the other end of the first connecting rod mentioned is provided with an inclined plane, which is in contact with the inclined block on the first pushing piece mentioned;
When the main frame mentioned is folded, the handle mentioned is pressed to push the first connecting rod mentioned to move up, then the first connecting rod mentioned pushes the first pushing piece mentioned to move in the outer direction of the upper pipe fitting mentioned, and then the first pushing piece mentioned pushes the first hinge lock buckle mentioned to open to complete the unlocking of the first hinge lock buckle mentioned.

In some embodiments, both ends of the handle mentioned facing the surface of the upper pipe fitting mentioned are provided with inclined planes;
The first driving device mentioned comprises the first bolt latch and the first bolt latch connecting piece;
The first bolt latch is provided with the first bolt latch spring;
The first bolt latch connecting piece mentioned is provided with the first bolt latch connecting piece spring, and the contact surface between the first bolt latch mentioned and the first bolt latch connecting piece mentioned is an inclined plane;
When the main frame mentioned is folded, the connecting pipe fitting mentioned releases the pressing on the first bolt latch connecting piece mentioned, the first bolt latch connecting piece spring mentioned pushes the first bolt latch connecting piece mentioned to move forward, the first bolt latch connecting piece mentioned releases the pressing on the first bolt latch mentioned, and the first bolt latch spring mentioned pushes the first bolt latch mentioned to move downward;
The upper pipe fitting mentioned is provided with the first moving groove, the first moving groove mentioned is arranged along the axial direction of the upper pipe fitting mentioned, and the inner wall of the first moving groove mentioned gradually shrinks from the rear end to the front end;
The first metal bolt is installed in the first moving groove mentioned, one end of the first metal bolt mentioned is equipped with the first metal bolt spring, the first metal bolt mentioned is connected to the inclined plane at one end of the handle mentioned, and one end of the first metal bolt spring mentioned bears against the first metal bolt mentioned, and the other end of the first metal bolt spring mentioned is installed on the inner wall of the first moving groove mentioned. The first metal bolt spring mentioned is used to push the first metal bolt mentioned against the connecting pipe fitting mentioned;
A catch slot is provided on the first metal bolt mentioned, and the first bolt latch spring mentioned can push the first bolt latch mentioned to move downward, so that the first bolt latch mentioned can fall into the catch slot provided on the first metal bolt mentioned, to prevent the resetting of the first metal bolt mentioned.

In some embodiments, the second driving device comprises the second pushing piece and the second connecting rod;
The second pushing piece mentioned comprises a pushing rod and an inclined block, and the pushing rod of the second pushing piece mentioned is connected with the second hinge lock buckle mentioned, so that the second pushing piece mentioned can move along the axis of the pushing rod;
One end of the second connecting rod mentioned is connected with one end of the handle mentioned, the second connecting rod mentioned is provided with the second connecting rod spring, the other end of the second connecting rod mentioned is provided with an inclined plane, and the inclined plane of the second connecting rod mentioned is in contact with the inclined block on the second pushing piece mentioned;
When the main frame is to be folded, the handle mentioned is pressed to push the second connecting rod mentioned to move upward, the second connecting rod mentioned pushes the second pushing piece mentioned to move toward the outer direction of the upper pipe fitting mentioned, and the second pushing piece mentioned pushes the second hinge lock buckle mentioned to open to complete the unlocking of the second hinge lock buckle mentioned.

In some embodiments, the second driving device mentioned comprises the second bolt latch and the second bolt latch connecting piece;
The second bolt latch mentioned is provided with the second bolt latch spring;
The second bolt latch connecting piece mentioned is provided with the second bolt latch connecting piece spring, and the contact surface between the second bolt latch mentioned and the second bolt latch connecting piece mentioned is an inclined plane;
When the main frame mentioned is folded, the lower pipe fitting mentioned releases the pressing on the second bolt latch connecting piece mentioned, the second bolt latch connecting piece spring mentioned pushes the second bolt latch connecting piece mentioned to move backward, the second bolt latch connecting piece mentioned releases the pressing on the second bolt latch mentioned, and the second bolt latch spring mentioned pushes the second bolt latch mentioned to move downward;
The upper pipe fitting is provided with the second moving groove, the second moving groove mentioned is arranged along the axial direction of the upper pipe fitting, and the inner wall of the second moving groove mentioned gradually shrinks from the front end to the rear end;
The second moving groove mentioned is provided with the second metal bolt, one end of the second metal bolt mentioned is equipped with the second metal bolt spring, and the second metal bolt mentioned is connected with the inclined plane at one end of the handle mentioned;
One end of the second metal bolt spring mentioned bears against the second metal bolt mentioned, and the other end of the second metal bolt spring mentioned is installed on the inner wall of the second moving groove mentioned. The second metal bolt spring mentioned is used to push the second metal bolt mentioned against the lower pipe fitting mentioned;
A catch slot is provided on the second metal bolt mentioned, and the second bolt latch spring mentioned pushes the second bolt latch mentioned to move downward, so that the second bolt latch mentioned can fall into the catch slot provided on the second metal bolt mentioned, to prevent the resetting of the second metal bolt mentioned.

In the second aspect, the embodiments of the invention provide a folding bicycle, comprising: a main frame, a front frame, a front wheel and a rear wheel as mentioned above; The main frame mentioned is connected with the front frame mentioned, the front wheel mentioned is installed on the front frame mentioned, and the rear wheel mentioned is installed on the main frame mentioned.

Compared with the existing technology, the embodiments of the present invention provide a folding bicycle and its main frame, wherein the main frame comprises: connecting pipe fitting; upper pipe fitting installed on the connecting pipe fitting mentioned which can be unfolded or folded relative to the upper pipe fitting; the lower pipe fitting installed on the upper pipe fitting mentioned, which can be unfolded or folded relative to the upper pipe fitting; the first hinge lock buckle installed on the upper pipe fitting mentioned, which is used to lock the connecting pipe fitting mentioned when the connecting pipe fitting mentioned is unfolded relative to the upper pipe fitting mentioned; the second hinge lock buckle installed on the upper pipe fitting mentioned, which is used to lock the lower pipe fitting mentioned when the lower pipe fitting mentioned is unfolded relative to the upper pipe fitting mentioned; and the handle, connecting the first hinge lock buckle mentioned and the second hinge lock buckle mentioned; When the first hinge lock buckle mentioned locks the connecting pipe fitting mentioned, and the second hinge lock buckle mentioned locks the lower pipe fitting mentioned, the handle mentioned is used to drive unlocking of both the first hinge lock buckle mentioned and the second lock buckle mentioned, so that the connecting pipe fitting mentioned and the lower pipe fitting mentioned can be folded relative to the upper pipe fitting mentioned. In the manner mentioned above, the handle mentioned drives the unlocking of the first hinge lock buckle mentioned and the second hinge lock buckle mentioned, so that the first hinge lock buckle mentioned and the second hinge lock buckle mentioned can be unlocked at the same time through one action, and the folding operation of the folding bicycle can be completed simply and quickly.

### Description of the Drawings

One or more embodiments are illustrated illustratively by the accompanying drawings, which do not constitute a qualification of the embodiments. Elements with the same reference numerals in the drawings are deemed to be similar elements, and the drawings do not constitute proportion restrictions unless otherwise stated.
Fig. 1 is a schematic diagram of the structure of a folding bicycle provided by one of the embodiments of the present invention, wherein the folding bicycle is in the fully opened state;
Fig. 2 is a schematic diagram of the structure of the folding bicycle as shown in Fig. 1, wherein the folding bicycle mentioned is in the initial folding state;
Fig. 3 is a schematic diagram of the structure of the main frame of the folding bicycle as shown in Fig. 1;
Fig. 4 is a schematic diagram of the structure of the main frame as shown in Fig. 3 from another angle;
Fig. 5 is a partial cross-sectional view of the main frame as shown in Fig. 4;
Fig. 6 is an exploded view of the first hinge assembly of the main frame as shown in Fig. 5;
Fig. 7 is an exploded view of the second hinge assembly of the main frame as shown in Fig. 5;
Fig. 8 is a cross-sectional view of the first lock buckle of the main frame as shown in Fig. 3;
Fig. 9 is a schematic diagram of the structure of the first lock buckle as shown in Fig. 8 in the first state;
Fig. 10 is a schematic diagram of the structure of the first lock buckle as shown in Fig. 8 in the second state;
Fig. 11 is a cross-sectional view of the second lock buckle of the main frame as shown in Fig. 3;
Fig. 12 is a schematic diagram of the structure of the second lock buckle as shown in Fig. 11 in the first state;
Fig. 13 is a schematic diagram of the structure of the second lock buckle as shown in Fig. 11 in the second state;
Fig. 14 is a partial cross-sectional view of the main frame as shown in Fig. 3;
Fig. 15 is another perspective of a partial cross-sectional view of the main frame as shown in Fig. 14, wherein the folding bicycle is in an open state;
Fig. 16 is a schematic diagram of the folding bicycle in a state of being about to be completely folded as shown in Fig. 1;
Fig. 17 is a schematic diagram of the folding bicycle in the fully folded state as shown in Fig. 1.

### Detailed Implementation Mode

In order to facilitate the understanding of this invention, a more detailed explanation of this invention will be given below in combination with the drawings and specific embodiments. It should be noted that when an element is expressed as "fixed" to another element, which means that it can be directly on another element, or there can be one or more centered elements between them. And when an element is expressed as "connected" with another element, it means that it can be directly connected to another element, or there can be one or more centered elements between them. The terms such as "vertical", "horizontal", "left", "right", "inside" and "outside" and similar expressions used in this Manual are only for illustrative purposes.

Unless otherwise defined, all technical and scientific terms used in this Manual have the same meaning as would normally be understood by technicians in the technical field of the present invention. The terms used in the Manual of this invention are intended only to describe specific embodiments and are not intended to limit the present invention. The term "and/or" used in the Manual includes any and all combinations of one or more related listed items.

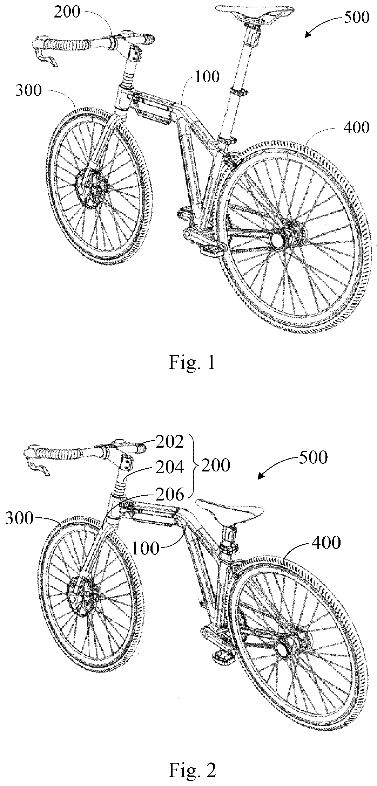

Please refer to Fig. 1. A folding bicycle 500 provided by one embodiment of the present invention comprises the main frame 100, the front frame 200, the front wheel 300, and the rear wheel 400. The front frame 200 mentioned is connected to the front end of the main frame 100, the front wheel 300 mentioned is installed on the front frame 200, and the rear wheel 400 mentioned is installed on the rear end of the main frame 100.

Please refer to Fig. 2. The front frame 200 comprises the grip 202, the front pipe 204 and the front fork 206. The middle part of the grip 202 mentioned is fixed to one end of the front pipe 204 mentioned, the other end of the front pipe 204 mentioned is fixed to one end of the front fork 206, the other end of the front fork 206 mentioned is installed with a front axle, and the front wheel 300 is installed on the front axle mentioned.

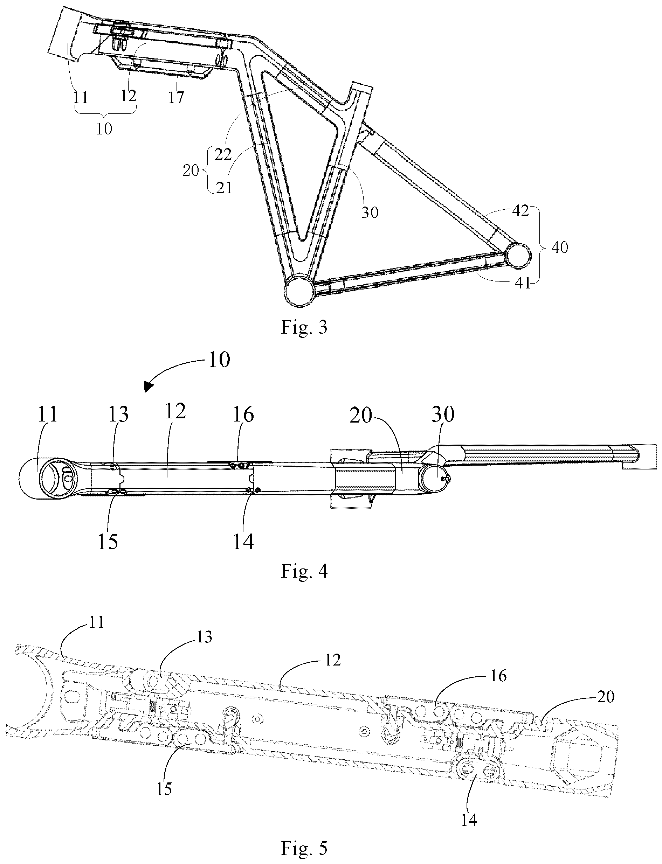

Please refer to Fig. 3. The main frame 100 mentioned comprises the upper tube assembly 10, the lower pipe 20, the vertical pipe 30 and the rear fork 40. One end of the upper pipe assembly 10 mentioned is fixed to one end of the lower pipe 20 mentioned, the vertical pipe 30 mentioned is fixed to the lower pipe 20 mentioned, and the rear fork 40 mentioned is connected to the lower pipe 20 mentioned.

The upper tube assembly 10 mentioned comprises the connecting pipe fitting 11 and the upper pipe fitting 12. The connecting pipe fitting 11 is of a hollow cylinder, and is connected to the front pipe 204 mentioned, the connecting pipe fitting 11 mentioned coincides with the axle center of the front pipe 204 mentioned, the front pipe 204 mentioned passes through the connecting pipe fitting 11 mentioned, and the front pipe 204 is connected with the connecting pipe fitting mentioned 11 (see Fig. 2).

The lower pipe 20 mentioned comprises the first lower pipe fitting 21 and the second lower pipe fitting 22. The first lower pipe fitting 21 mentioned and the second lower pipe fitting 22 mentioned are connected with the upper pipe fitting 12 mentioned at the same end.

One end of the vertical pipe 30 mentioned is fixed to one end of the first lower pipe fitting 21 mentioned, and one end of the second lower pipe fitting 22 mentioned is fixed to the vertical pipe 30 mentioned and close to the other end of the vertical pipe 30 mentioned. A seat cushion is installed at the upper end of the vertical pipe 30 mentioned, and a seat pipe clamp is installed on the vertical pipe 30 mentioned, which is used to control the expansion and contraction of the vertical pipe 30 mentioned and adjust the height of the seat cushion.

The rear fork 40 mentioned comprises the rear lower fork 41 and the rear upper fork 42. One end of the rear lower fork 41 mentioned is fixed at the connection between the first lower pipe fitting 21 mentioned and the vertical pipe 30 mentioned, and one end of the rear upper fork 42 mentioned is fixed the connection between the second lower pipe fitting 22 mentioned and the vertical pipe 30 mentioned, the other end of the rear upper fork 42 mentioned is connected to the other end of the rear lower fork 41 mentioned, the connecting part of the rear upper fork 42 mentioned and the rear lower fork 41 mentioned is installed with a rear axle, and the rear wheel 400 mentioned is installed on the rear axle mentioned.

Please refer to Fig. 4 and Fig. 5 together. The upper pipe assembly 10 mentioned also comprises the first hinge assembly 13, the second hinge assembly 14, the first hinge lock buckle 15 and the second hinge lock buckle 16.

The first hinge assembly 13 mentioned is connected between the connecting pipe fitting 11 mentioned and the upper pipe fitting 12 mentioned. Similarly, the first hinge lock buckle 15 mentioned is installed on the upper pipe fitting 12 mentioned, and the first hinge lock buckle 15 mentioned is used to lock the connecting pipe fitting 11 mentioned when the connecting pipe fitting 11 mentioned is unfolded relative to the upper pipe fitting12 mentioned. Specifically, the first hinge lock buckle 15 mentioned is connected between the connecting pipe fitting 11 mentioned and the upper pipe fitting 12 mentioned, the first hinge assembly 13 mentioned and the first hinge lock buckle 15 mentioned are located on opposite sides of the connecting pipe fitting 11 mentioned and the upper pipe fitting 12 mentioned, so that the connecting pipe fitting 11 mentioned can rotate through the first hinge assembly 13 mentioned relative to the upper pipe fitting 12 mentioned, and the first hinge lock buckle 15 mentioned can lock the connecting pipe fitting 11 mentioned to the upper pipe fitting 12 mentioned.

Similarly, the second hinge assembly 14 mentioned is connected between the upper pipe fitting 12 mentioned and the lower pipe fitting 20 mentioned. Similarly, the second hinge lock buckle 16 mentioned is installed on the upper pipe fitting 12 mentioned, and the second hinge lock buckle 16 mentioned is used to lock the lower pipe fitting 20 mentioned when the lower pipe fitting 20 mentioned is unfolded relative to the upper pipe fitting 12 mentioned. Specifically, the second hinge lock buckle 16 mentioned is connected between the upper pipe fitting 12 mentioned and the lower pipe fitting 20 mentioned, and the second hinge assembly 14 mentioned and the second hinge lock buckle 16 mentioned are located on opposite sides of the upper pipe fitting 12 mentioned and the lower pipe fitting 20 mentioned, so that the upper pipe fitting 12 mentioned can rotate through the second hinge assembly 14 mentioned relative to the lower pipe fitting 20 mentioned, and the second hinge lock buckle 16 mentioned can lock the lower pipe fitting 20 mentioned to the upper pipe fitting 12 mentioned.

The first hinge assembly 13 mentioned and the second hinge assembly 14 mentioned are located on opposite sides of the upper pipe fitting 12 mentioned, and the first hinge lock buckle 15 mentioned and the second hinge lock buckle 16 mentioned are located on opposite sides of the upper pipe fitting 12 mentioned.

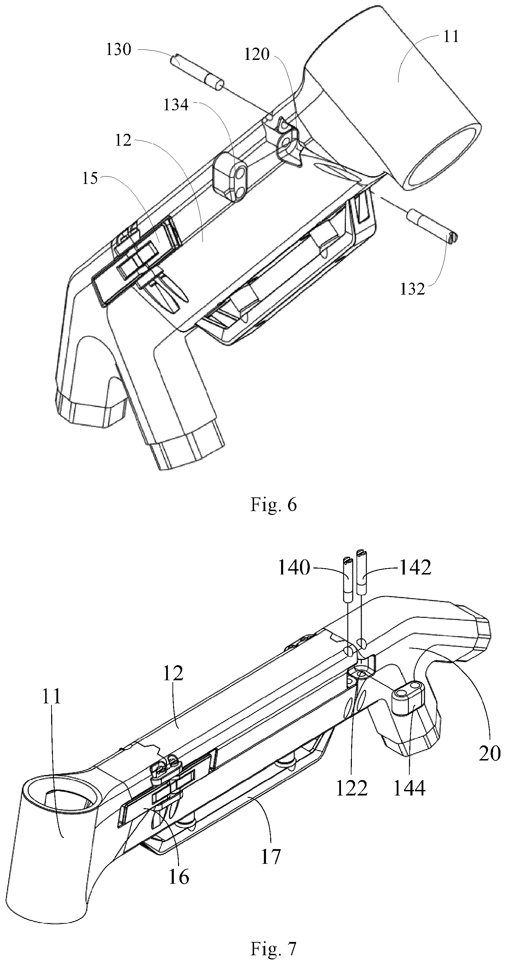

Please refer to Fig. 6. The connecting pipe 11 mentioned and the upper pipe fitting 12 mentioned are both hollow pipes, the connection between the connecting pipe fitting 11 mentioned and the upper pipe fitting 12 mentioned is provided with the first accommodating groove 120, and the first accommodating groove 120 mentioned is used to accommodate the first hinge assembly 13 mentioned, which can not only make the upper pipe fitting assembly 10 mentioned compact and reduce the volume, but also prevent the first hinge assembly 13 mentioned from colliding with other components.

The first hinge assembly 13 mentioned comprises the first front axle 130, the first rear axle 132 and the first hinge connecting piece 134. The first front axle 130 mentioned is connected between the connecting pipe fitting 11 mentioned and the first hinge connecting piece 134 mentioned, and the first rear axle 132 between is connected between the first hinge connecting piece 134 mentioned and the upper pipe fitting 12 mentioned. Specifically, the first front axle 130 mentioned is installed on the connecting pipe fitting 11 mentioned, the first rear axle 132 mentioned is installed on the upper pipe fitting 12 mentioned, one end of the first hinge connecting piece 134 mentioned is sleeved on the first front axle 130 mentioned, and the other end of the first hinge connecting piece 134 mentioned is sleeved on the first rear axle 132 mentioned, so that the first hinge connecting piece 134 mentioned can rotate about the first front axle 130 mentioned relative to the connecting pipe fitting 11 mentioned, and the first hinge connecting piece 134 mentioned can rotate about the first rear axle 132 mentioned relative to the upper pipe fitting 12 mentioned.

The first front axle 130 mentioned and the first rear axle 132 mentioned are arranged in parallel, and the distance between the axle center of the first front axle 130 mentioned and the axle center of the first rear axle 132 mentioned is not less than the depth of the axle center embedded in the connecting pipe fitting 11 mentioned and the upper pipe fitting 12 mentioned, so that when the connecting pipe fitting 11 mentioned is folded relative to the upper pipe fitting 12 mentioned, the connecting pipe fitting 11 mentioned and the upper pipe fitting 12 mentioned can fit seamlessly, and when the pipe fitting 11 mentioned is unfolded relative to the upper pipe fitting 12 mentioned, the connecting pipe fitting 11 mentioned and the upper pipe fitting 12 mentioned will not interfere with each other.

Please refer to Fig. 7. Similarly, the connection between the upper pipe fitting 12 mentioned and the lower pipe fitting 20 mentioned is provided with the second accommodating groove 122, and the second accommodating groove 122 mentioned is used to accommodate the second hinge assembly 14 mentioned, which can not only make the structure of the upper pipe assembly 10 mentioned compact and reduce the volume, but also prevent the second hinge assembly 14 from colliding with other assemblies.

The second hinge assembly 14 mentioned comprises the second front axle 140, the second rear axle 142 and the second hinge connecting piece 144. The second front axle 140 mentioned is connected between the upper pipe fitting 12 mentioned and the second hinge connecting piece 144 mentioned, and the second rear axle 142 mentioned is connected between the second hinge connecting piece 144 mentioned and the lower pipe 20 mentioned. Specifically, the second front axle 140 mentioned is installed on the upper pipe fitting 12 mentioned, the second rear axle 142 mentioned is installed on the lower pipe fitting 20 mentioned, one end of the second hinge connecting piece 144 mentioned is sleeved on the second front axle 140 mentioned, and the other end of the second hinge connecting piece 144 mentioned is sleeved on the second rear axle 142 mentioned.

The second front axle 140 mentioned and the second rear axle 142 mentioned are arranged in parallel, and the distance between the axle center of the second front axle 140 mentioned and the axle center of the second rear axle 142 mentioned is not less than the depth of the axle center embedded in the upper pipe fitting 12 mentioned and the lower pipe 20 mentioned.

When the folding bicycle 500 mentioned is opened and placed on a horizontal plane, the first front axle 130 mentioned and the first rear axle 132 mentioned are located on a vertical plane, and the second front axle 140 mentioned and the second rear axle 142 mentioned are located on another vertical plane. There is a preset angle between the first front axle 130 mentioned and the second front axle 140 mentioned, for example, the preset angle is about 38 degrees for the illustrated frame size, so that the axle of the front wheel 300 mentioned and the axle of the rear wheel 400 mentioned are aligned after the folding bicycle 500 mentioned is folded.

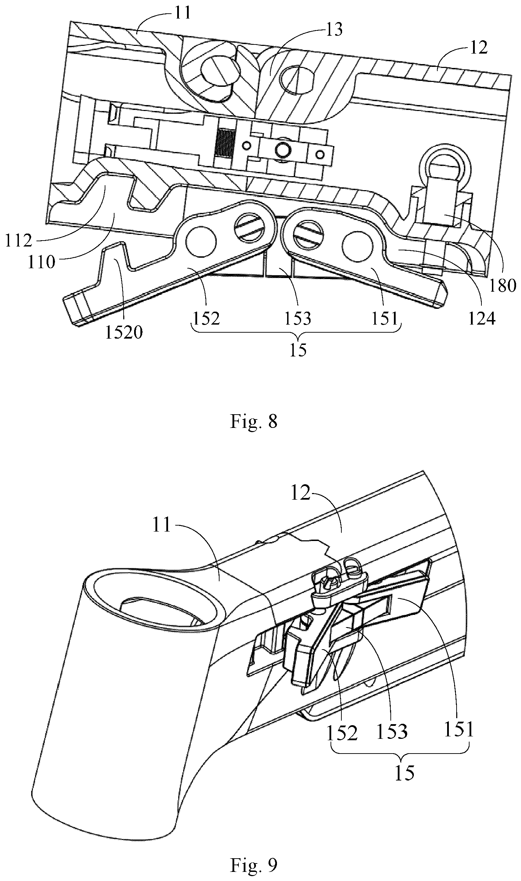

Please refer to Fig. 8 to Fig. 10 together. The first hinge lock buckle 15 mentioned comprises the first lock transmission element 151, the first lock buckle body 152 and the first lock buckle connecting piece 153. The first lock buckle connecting piece 153 mentioned is connected between the first lock buckle transmission element 151 mentioned and the first lock buckle body 152 mentioned, so that the first lock buckle transmission element 151 mentioned can rotate around the first lock buckle connection piece 153 mentioned, and the first lock buckle body 152 mentioned can rotate around the first lock buckle connecting piece 153 mentioned.

Specifically, one end of the first locking connecting piece 153 mentioned is hinged to the first locking buckle transmission element 151 mentioned, and the other end of the first lock buckle connecting piece 153 mentioned is hinged to the first lock body 152 mentioned, so that the first lock buckle connecting piece 153 mentioned is a connecting rod, and when the first lock buckle transmission element 151 mentioned rotates, the first lock buckle main body 152 mentioned is driven to rotate through the first lock buckle connecting piece 153 mentioned.

The connecting pipe fitting 11 mentioned is provided with the first accommodating groove 110 at one end connected with the upper pipe fitting 12 mentioned. The first accommodating groove 110 mentioned is used to accommodate the first lock buckle body 152 mentioned. The bottom of the first accommodating groove 110 mentioned is provided with the first limit groove 112. The first limit block 1520 is provided on the surface of the first lock buckle body 152 mentioned opposite to the first accommodating groove 110 mentioned, and when the first limit block 1520 mentioned is accommodated in the first accommodating groove 112 mentioned, the first hinge lock buckle 15 mentioned locks the connecting pipe fitting 11 mentioned.

The upper pipe fitting 12 mentioned is also provided with the second accommodating groove 124. When the connecting pipe fitting 11 mentioned is unfolded relative to the upper pipe fitting 12 mentioned, the first accommodating groove 110 mentioned is connected with the second accommodating groove 124 mentioned, and the second accommodating groove 124 mentioned is used for accommodating the first lock buckle transmission element 151 mentioned.

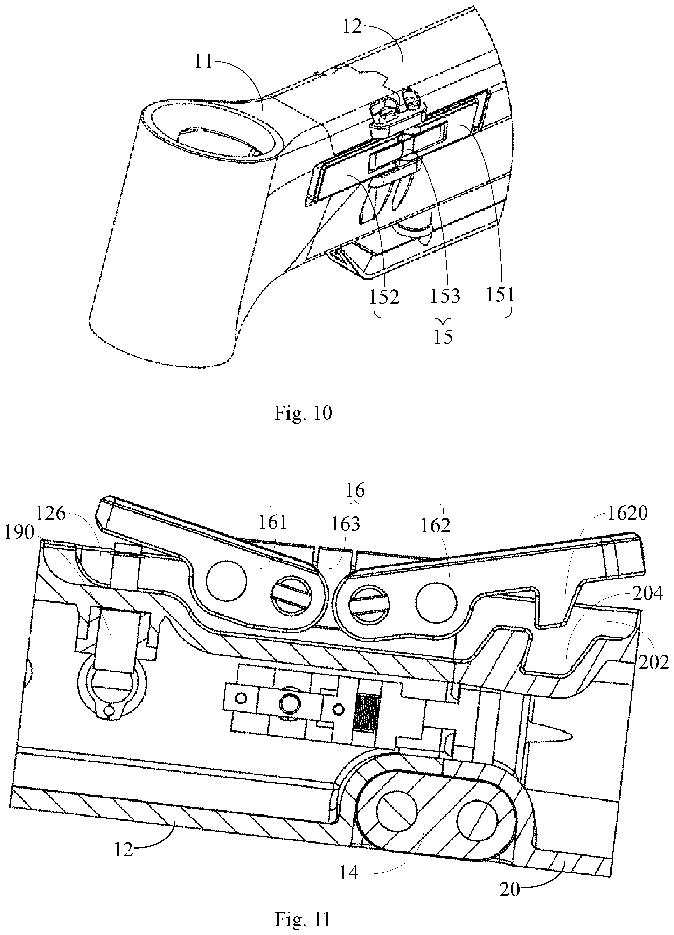

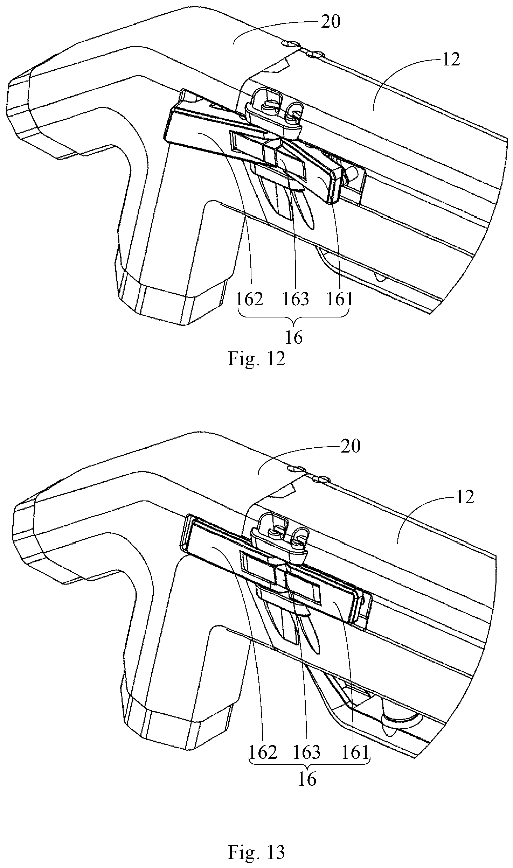

Please refer to Fig. 11 to Fig. 13 together. The second hinge lock buckle 16 mentioned comprises the second lock buckle transmission element 161, the second lock buckle body 162 and the second lock buckle connecting piece 163. The second lock buckle connecting piece 163 mentioned is connected between the second lock buckle transmission element 161 mentioned and the second lock buckle body 162 mentioned, so that the second lock buckle transmission element 161 mentioned can rotate around the second lock buckle connection piece 163 mentioned, and the second lock buckle body 162 mentioned can rotate around the second lock buckle connecting piece 163 mentioned.

Specifically, one end of the second lock buckle connecting piece 163 mentioned is hinged to the second lock buckle transmission element 161 mentioned, and the other end of the second lock buckle connecting piece 163 mentioned is hinged to the second lock buckle body 162 mentioned, so that the second buckle connecting piece 163 mentioned is a connecting rod, and the second lock buckle transmission element 161 mentioned drives the second buckle main body 162 mentioned to rotate through the second buckle connecting piece 163 mentioned while rotating.

The lower pipe 20 mentioned is provided with the third accommodating groove 202 at one end connected with the upper pipe fitting 12 mentioned. The third accommodating groove 202 mentioned is used to accommodate the second lock buckle body 162 mentioned. The bottom of the third accommodating groove 202 mentioned is provided with the second limit groove 204. The second limit block buckle 1620 is provided on the surface of the second lock buckle body 162 mentioned opposite to the third accommodating groove 202 mentioned. When the second hinge lock buckle 16 mentioned is locked, the second limit block buckle 1620 mentioned is accommodated in the second limit groove 204 mentioned.

The upper pipe fitting 12 mentioned is also provided with the fourth accommodating groove 126. When the lower pipe fitting 20 mentioned is unfolded relative to the upper pipe fitting 12 mentioned, the third accommodating groove 202 mentioned is connected with the fourth accommodating groove 126 mentioned, and the fourth accommodating groove 126 mentioned is used for accommodating the second lock buckle transmission element 161 mentioned.

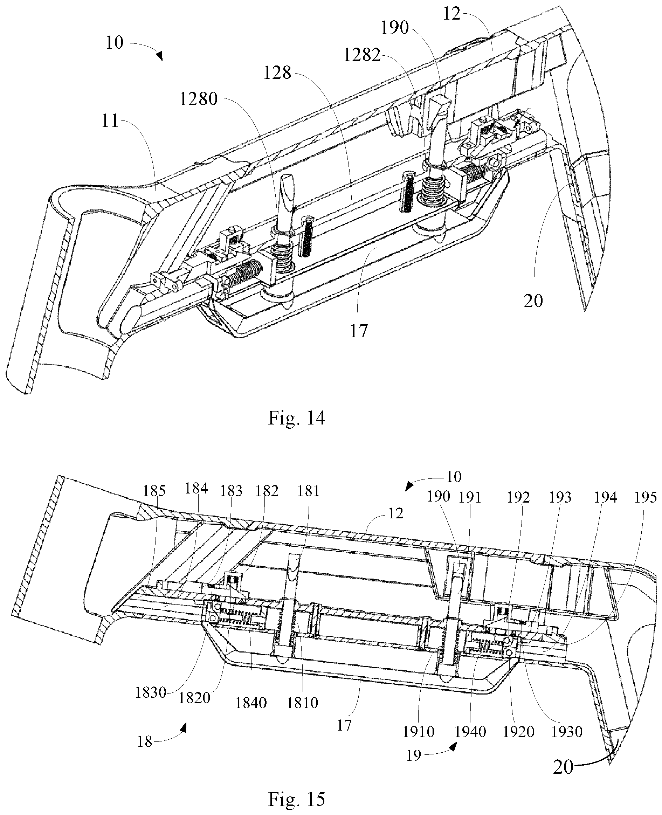

Please refer to Fig. 14 and Fig. 15 together. The upper pipe fitting 12 mentioned is provided with a mounting plate 128. The mounting plate 128 mentioned is provided on the inner wall of the upper pipe fitting 12 mentioned and along the axial direction of the upper pipe fitting 12 mentioned, which is provided with a circular first through-hole 1280 and a circular second through-hole 1282.

The upper pipe assembly 10 mentioned also comprises the handle 17, the first driving device 18 and the second driving device 19. The handle 17 mentioned is connected to the first driving device 18 mentioned and the second driving device 19 mentioned, respectively. The driving device 18 mentioned is connected to the first hinge lock buckle 15 mentioned, and the second driving device 19 mentioned is connected to the second hinge lock buckle 16 mentioned. When the handle 17 mentioned is pressed, the first driving device 18 mentioned can be made to drive the unlocking of the first hinge lock buckle 15 mentioned, and meanwhile the second driving device 19 mentioned can be made to drive the unlocking of the second hinge lock buckle 16 mentioned. The first driving device 18 mentioned and the second driving device 19 mentioned are installed on opposite ends of the mounting plate 128 mentioned.

Both ends of the handle 17 mentioned facing the surface of the upper pipe fitting 12 mentioned are provided with inclined planes.

The first driving device 18 mentioned comprises the first pushing piece 180 and the first connecting rod 181. One end of the first pushing piece 180 mentioned is provided with a pushing rod, which bears against the first lock buckle transmission element 151 mentioned, so that the first pushing piece 180 mentioned can move along the axial direction of the pushing rod mentioned, and the other end of the first pushing piece 180 mentioned is provided with an inclined block. One end of the first connecting rod 181 the surface of is connected with the handle 17 mentioned, the first connecting rod 181 mentioned is sheathed with the first connecting rod spring 1810 mentioned, and the other end of the first connecting rod 181 mentioned is provided with an inclined plane. The inclined plane of the connecting rod 181 mentioned is in contact with the inclined block on the first pushing piece 180 mentioned, the first connecting rod 181 mentioned passes through the first through-hole 1280 mentioned, and the first connecting rod 181 mentioned can move along the axis of the first through-hole 1280 mentioned. When the main frame mentioned 100 is folded, the handle 17 mentioned is pressed to push the first connecting rod 181 mentioned to move upward, the first connecting rod 181 mentioned pushes the first pushing piece 180 mentioned to move toward the outer side of the upper pipe fitting 12 mentioned, and the first pushing piece 180 mentioned pushes the first lock buckle transmission element 151 mentioned to open to complete the unlocking of the first hinge lock buckle 15 mentioned.

The first driving device 18 mentioned also comprises the first bolt latch 182 and the first bolt latch connecting piece 183. The first bolt latch spring 1820 is installed on the first bolt latch 182 mentioned, and the first bolt latch connecting piece spring 1830 is installed on the first bolt latch connecting piece 183 mentioned. The contact surface of the first bolt latch 182 mentioned and the first bolt latch connecting piece 183 mentioned is an inclined plane. When the main frame 100 mentioned is folded, the connecting pipe fitting 11 mentioned releases the pressing on the first bolt latch connecting piece 183, the first bolt latch connecting piece spring 1830 mentioned pushes the first bolt latch connecting piece 183 mentioned to move forward (that is, to move toward the connecting pipe fitting11 mentioned); and the first bolt latch connecting piece 183 mentioned releases the pressing on the first bolt latch 182 mentioned, and the first bolt latch spring 1820 mentioned pushes the first bolt latch 182 to move downward (that is, to move in the direction of the handle 17 mentioned).

The upper pipe fitting 12 mentioned is provided with the first moving groove 185. The first moving groove 185 mentioned is roughly arranged along the axial direction of the upper pipe fitting 12 mentioned, the inner wall of which is gradually reduced from the rear end to the front end. The first metal bolt 184 is installed in the first moving groove 185 mentioned. One end of the first metal bolt 184 mentioned is equipped with the first metal bolt spring 1840, and the first metal bolt 184 mentioned is connected to the inclined plane of one end of the handle 17 mentioned. One end of the first metal bolt spring 1840 mentioned bears against the first metal bolt 184 mentioned, and the other end of the first metal bolt spring 1840 mentioned is installed on the inner wall of the first moving groove 185 mentioned. The first metal bolt spring 1840 mentioned is used to push the first metal bolt 184 mentioned against the connecting pipe fitting 11 mentioned.

When the main frame 100 mentioned is to be folded, the handle 17 mentioned moves upward, the first metal bolt 184 mentioned moves backward along the inclined plane at one end of the handle 17 mentioned to drive the first metal bolt 184 mentioned to compress the first metal bolt spring 1840, and the first metal bolt 184 mentioned moves backward along the first moving groove 185 mentioned to be detached from the connecting pipe fitting 11 mentioned, which can rotate relative to the upper pipe fitting 12 mentioned through the first hinge assembly 13 mentioned. When the connecting pipe fitting 11 mentioned rotates relative to the upper pipe fitting 12 mentioned, the connecting pipe fitting 11 mentioned releases the pressing on the first bolt latch connecting piece 183 mentioned, the first bolt latch connecting piece spring 1830 mentioned pushes the first bolt latch connecting piece 183 mentioned to move forward, and the first bolt latch spring 1820 mentioned pushes the first bolt latch 182 mentioned to move downward, so that the first bolt latch 182 mentioned can fall into the catch slot provided on the first metal bolt 184 mentioned, to prevent the resetting of the first metal bolt 184 mentioned.

When the pressing on the handle 17 mentioned is released, the first connecting rod spring 1810 mentioned pushes the resetting of the handle 17 mentioned.

When the folding bicycle 500 mentioned is unfolded, the connecting pipe fitting 11 mentioned pushes the first bolt latch connecting piece 183 mentioned to move backward, and the inclined plane of the first bolt latch connecting piece 183 mentioned is matched with the inclined plane of the first bolt latch 182 mentioned, so that the first bolt latch 182 mentioned can move upward to be detached from the catch slot provided on the first metal bolt 184 mentioned and release the locking of the first metal bolt 184 mentioned. The first metal bolt spring 1840 mentioned pushes the first metal bolt 184 mentioned to move forward and bear against the connecting pipe fitting 11 mentioned, and since the inner wall of the first moving groove 185 mentioned gradually shrinks from the rear end to the front end, the connecting pipe 11 bears against the inner wall of the first moving groove 185 mentioned. The setting of the first metal bolt 184 mentioned can prevent the connecting pipe fitting 11 from rotating relative to the upper pipe fitting 12 mentioned when the folding bicycle 500 is unfolded, which can not only enhance the connection strength of the first hinge assembly 13 mentioned, effectively resist the torsion and bending force caused by the folding bicycle 500 when being pedaled, and keep the upper pipe fitting assembly 10 mentioned strong, but also prevent the first hinge lock buckle 15 mentioned from being accidentally opened during riding.

The second driving device 19 mentioned comprises the second pushing piece 190 and the second connecting rod 191. One end of the second pushing piece 190 mentioned is provided with a pushing rod, and the pushing rod mentioned bears against the second lock buckle transmission element 161 mentioned, so that the second pushing piece 190 mentioned can move along the axial direction of the pushing rod mentioned, and the other end of the second pushing piece 190 mentioned is provided with an inclined block. One end of the second connecting rod 191 mentioned is connected to one end of the handle 17 mentioned, the second connecting rod spring 1910 is sleeved on the second connecting rod 191 mentioned, and the other end of the second connecting rod 191 mentioned is provided with an inclined plane. The inclined plane of the second connecting rod 191 mentioned is in contact with the inclined block on the second pushing piece 190 mentioned, the second connecting rod 191 mentioned passes through the second through-hole 1282 mentioned, and the second connecting rod 191 mentioned can move along the axis of the second through-hole 1282 mentioned. When the main frame 100 mentioned is to be folded, the handle 17 mentioned is pressed to push the second connecting rod 191 mentioned to move upward, the second connecting rod 191 mentioned pushes the second pushing piece 190 mentioned to move toward the outer direction of the upper pipe fitting 12 mentioned, and the second pushing piece 190 mentioned pushes the second lock buckle transmission element 161 mentioned to open to complete the unlocking of the second hinge lock buckle 16 mentioned.

The second driving device 19 mentioned also comprises the second bolt latch 192 and the second bolt latch connecting piece 193. The second bolt latch 192 mentioned is provided with the second bolt latch spring 1920, and the second bolt latch connecting piece 193 mentioned is provided with the second bolt latch spring 1930, and the contact surface of the second bolt latch 192 mentioned and the second bolt latch connecting piece 193 mentioned is an inclined plane. When the main frame 100 mentioned is folded, the lower pipe fitting 20 mentioned releases the pressing on the second bolt latch connecting piece 193 mentioned, the second bolt latch connecting piece spring 1930 mentioned pushes the second bolt latch connecting piece 193 mentioned to move backward (that is, to move toward the lower pipe fitting 20 mentioned); and the second bolt latch connecting piece 193 mentioned releases the pressing on the second bolt latch 192 mentioned, and the second bolt latch spring 1920 mentioned pushes the second bolt latch 192 mentioned to move downward (that is, to move in the direction of the handle 17 mentioned).

The upper pipe fitting 12 mentioned is provided with the second moving groove 195. The second moving groove 195 mentioned is arranged substantially along the axial direction of the upper pipe fitting 12 mentioned, the inner wall of which is gradually reduced from the front end to the rear end (that is, from the direction of the upper pipe fitting 12 mentioned facing the lower pipe 20 mentioned). The second metal bolt 194 is installed in the second moving groove 195 mentioned. One end of the second metal bolt 194 mentioned is equipped with the second metal bolt spring 1940, and the second metal bolt 194 mentioned is connected to the inclined plane at one end of the handle 17 mentioned. One end of the second metal bolt spring 1940 mentioned bears against the second metal bolt 194 mentioned, and the other end of the second metal bolt spring 1940 mentioned is installed on the inner wall of the second moving groove 195 mentioned. The second metal bolt spring 1940 mentioned is used for pushing the second metal bolt 194 mentioned to be against the lower pipe 20 mentioned.

When the main frame 100 mentioned is to be folded, the handle 17 mentioned moves upward, the second metal bolt 194 mentioned moves forward along the inclined plane at one end of the handle 17 mentioned to drive the second metal bolt 194 mentioned to compress the second metal bolt spring 1940, the second metal bolt 194 mentioned moves forward along the second moving groove 195 mentioned to be detached from the lower pipe fitting 20 mentioned, and the lower pipe fitting 20 mentioned can rotate relative to the upper pipe fitting 12 mentioned through the second hinge assembly 13 mentioned. When the lower pipe 20 mentioned rotates relative to the upper pipe fitting 12 mentioned, the lower pipe 20 mentioned releases the pressing on the second bolt latch connecting piece 193 mentioned, and the second bolt latch connecting piece spring 1930 mentioned pushes the second bolt latch connecting piece 193 mentioned to move backward, and the second bolt latch spring 1920 mentioned pushes the second bolt latch 192 mentioned to move downward, so that the second bolt latch 192 mentioned can fall into the catch slot provided on the second metal bolt 194 mentioned, to prevent the resetting of the second metal bolt 194 mentioned.

When the pressing on the handle 17 mentioned is released, the second connecting rod spring 1910 mentioned pushes the resetting of the handle 17 mentioned.

When the folding bicycle 500 mentioned is unfolded, the lower pipe fitting 20 mentioned pushes the second bolt latch connecting piece 193 mentioned to move forward, and the inclined plane of the second bolt latch connecting piece 193 mentioned is matched with that of the second bolt latch 192 mentioned, so that the second bolt latch 192 mentioned can move upward to be detached from the catch slot provided on the second metal bolt 194 mentioned and release the locking of the second metal bolt 194 mentioned. The second metal bolt spring 1940 mentioned pushes the second metal bolt 194 mentioned to move forward and bear against the lower pipe fitting 20 mentioned, and since the inner wall of the second moving groove 195 mentioned gradually shrinks from the front end to the rear end, the second metal bolt 194 mentioned bears against the inner wall of the second moving groove 195 mentioned. The setting of the second metal bolt 194 mentioned can prevent the lower pipe fitting 20 mentioned from rotating relative to the upper pipe fitting 12 mentioned when the folding bicycle 500 is unfolded, which can not only enhance the connection strength of the second hinge assembly 14 mentioned, effectively resist the torsion and bending force caused by the folding bicycle 500 when being pedaled, keep the upper pipe fitting assembly 10 mentioned strong, but also prevent the second hinge lock buckle 16 mentioned from being accidentally opened during riding.

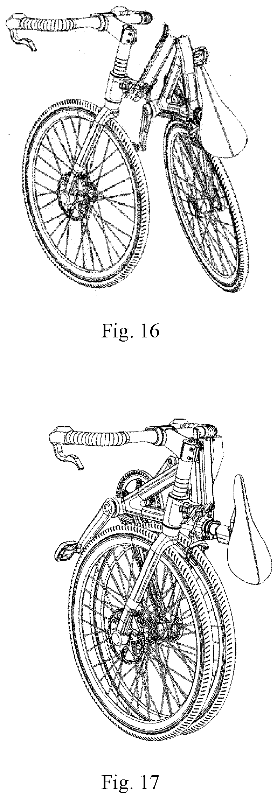

Please refer to Fig. 16. When the bicycle is to be folded, the handle 17 mentioned pushes the first connecting rod 181 mentioned and the second connecting rod 191 mentioned to drive the first lock buckle connecting piece 140 mentioned and the second lock buckle connecting piece 150 mentioned to push horizontally, so that the first hinge lock buckle 14 mentioned and the second hinge lock buckle 15 mentioned can be unlocked at the same time, and the main frame 100 can be folded by one continuous action.

Please refer to Fig. 17. After the folding bicycle 500 mentioned is folded, the axle of the front wheel 300 mentioned and that of the rear wheel 400 mentioned are arranged coaxially, so that the folding bicycle 500 mentioned can rotate forward to facilitate handling and carrying.

## Claims

1. A main frame (100) for a folding bicycle, which is **characterized by** comprising:
a connecting pipe fitting (11);
an upper pipe fitting (12); the upper pipe fitting (12) mentioned is installed on the connecting pipe fitting (11), and the connecting pipe fitting (11) mentioned can be unfolded or folded relative to the upper pipe fitting (12) mentioned;
a lower pipe fitting (22); the lower pipe fitting (22) mentioned is installed on the upper pipe fitting (12) mentioned, and the lower pipe fitting (22) mentioned can be unfolded or folded relative to the upper pipe fitting (12) mentioned;
a first hinge lock buckle (15), which is installed on the upper pipe fitting (12) mentioned; the first hinge lock buckle (15) mentioned is used to lock the connecting pipe fitting (11) mentioned when the connecting pipe fitting (11) mentioned is unfolded relative to the upper pipe fitting (12) mentioned;
a second hinge lock buckle (16), which is installed on the upper pipe fitting (12) mentioned; the second hinge lock buckle (16) mentioned is used to lock the lower pipe fitting (22) mentioned when the lower pipe fitting (22) mentioned is unfolded relative to the upper pipe fitting (12) mentioned; and
a handle (17), which is used to connect the first hinge lock buckle (15) mentioned and the second hinge lock buckle (16) mentioned; when the first hinge lock buckle (15) mentioned locks the connecting pipe fitting (11) mentioned and the second hinge lock buckle (16) mentioned locks the lower pipe fitting (22) mentioned, the handle (17) mentioned is used to drive the unlocking of both the first hinge lock buckle (15) mentioned and the second hinge lock buckle (16) mentioned, so that the connecting pipe fitting (11) mentioned and the lower pipe fitting (22) mentioned can be folded relative to the upper pipe fitting (12) mentioned and **characterised in that**
the first hinge lock buckle (15) mentioned is used to lock the connecting pipe fitting (11) mentioned when the connecting pipe fitting (11) mentioned is unfolded relative to the upper pipe fitting (12) mentioned; wherein the first hinge lock buckle (15) mentioned comprises a first lock buckle transmission element (151), a first lock buckle main body (152) and a first lock buckle connection piece (153); the first lock buckle connecting piece (153) mentioned is connected between the first lock buckle transmission element (151) mentioned and the first lock buckle main body (152) mentioned, so that the first lock buckle transmission element (151) mentioned can rotate around the first lock buckle connecting piece (153) mentioned, and the first lock buckle main body (152) mentioned can rotate around the first lock buckle connecting piece (153) mentioned; the first lock buckle main body (152) is provided with a first limit block (1520); the connecting pipe fitting (11) mentioned is provided with a first accommodating groove (110), the first accommodating groove (110) mentioned is used for accommodating the first lock buckle body main (152) mentioned, and the bottom of the first accommodating groove (110) mentioned is provided with a first limit groove (112); when the first hinge lock buckle (15) is locked, the first limit block (1520) is accommodated in the first limit groove (112);
and the second hinge lock buckle (16) mentioned comprising a second lock buckle transmission element (161), a second lock buckle body (162) and a second lock buckle connecting piece (163); the second lock buckle connecting piece (163) mentioned is connected between the second buckle transmission element mentioned and the second lock buckle body (162) mentioned, so that the second buckle transmission element mentioned can rotate around the second lock buckle connecting piece (163) mentioned, and the second lock buckle body (162) mentioned can rotate around the second lock buckle connecting piece (163) mentioned; the second lock buckle body (162) mentioned is provided with a second limit block; the lower pipe fitting (22) mentioned is provided with a third accommodating groove (202), which is used for accommodating the second lock buckle body (162) mentioned; the bottom of the third accommodating groove (202) mentioned is provided with a second limit groove (204), and when the second hinge lock buckle (16) is locked, the second limit block is accommodated in the second limit groove (204).

2. Amain frame (100) as described in claim 1, **characterized by** the upper pipe fitting (12) mentioned which is provided with a second accommodating groove (122);
the first accommodating groove (110) mentioned is connected with the second accommodating groove (122) mentioned;
the second accommodating groove (122) mentioned is used for accommodating the first lock buckle transmission element (151) mentioned.

3. A main frame (100) as described claim 1, **characterized by** the lower pipe fitting (22) mentioned which is provided with a fourth accommodating groove (126);
the third accommodating groove (202) mentioned is connected with the fourth accommodating groove (126) mentioned;
the fourth accommodating groove (126) mentioned is used for accommodating the second lock buckle transmission element (161) mentioned.

4. A main frame (100) as described in claim 1, **characterized by** comprising a first hinge assembly (13) and a second hinge assembly (14);
the first hinge assembly (13) mentioned is connected between the connecting pipe fitting (11) mentioned and the upper pipe fitting (12) mentioned, so that the connecting pipe fitting (11) mentioned can rotate relative to the upper pipe fitting (12) mentioned;
the second hinge assembly (14) mentioned is connected between the lower pipe fitting (22) mentioned and the upper pipe fitting (12) mentioned, so that the lower pipe fitting (22) mentioned can rotate relative to the upper pipe fitting (12) mentioned;
the first hinge assembly (13) and the second hinge assembly (14) mentioned are located on opposite sides of the upper pipe fitting (12) mentioned respectively;
the first hinge lock buckle (15) and the second hinge lock buckle (16) mentioned are located on opposite sides of the upper pipe fitting (12) mentioned respectively;
the first hinge assembly (13) and the first hinge lock buckle (15) mentioned are located on opposite sides of the upper pipe fitting (12) mentioned respectively.

5. Amain frame (100) as described in claim 4, **characterized by** one end of the first hinge assembly (13) mentioned which is installed on the connecting pipe mentioned, and the other end of the first hinge assembly (13) mentioned which is installed on the upper pipe fitting (12) mentioned, so that the first hinge assembly (13) mentioned can rotate relative to the connecting pipe fitting (11) mentioned, and the first hinge assembly (13) mentioned can rotate relative to the upper pipe fitting (12) mentioned.

6. A main frame (100) as described in claim 5, **characterized by** the first accommodating groove (110) which is provided at the connection between the connecting pipe fitting (11) and the upper pipe fitting (12) mentioned used for accommodating the first hinge assembly (13) mentioned.

7. A main frame (100) as described in claim 6, **characterized by** the first hinge assembly (13) mentioned which comprises a first front axle (130), a first rear axle (132) and a first hinge connecting piece (134);
the first front axle (130) mentioned is connected between the connecting pipe fitting (11) mentioned and the first hinge connecting piece (134) mentioned, and the first rear axle (132) mentioned is connected between the first hinge connecting piece (134) and the upper pipe fitting (12) mentioned;
the first front axle (130) mentioned and the first rear axle (132) mentioned are arranged in parallel, and the distance between the axle center of the first front axle (130) mentioned and that of the first rear axle (132) mentioned is not less than depth of the axle center embedded in the connecting pipe fitting (11) mentioned and the upper pipe fitting (12) mentioned.

8. A main frame (100) as described in claim 7, **characterized by** one end of the second hinge assembly (14) mentioned which is installed on the upper pipe fitting (12) mentioned, and the other end of the second hinge assembly (14) mentioned which is installed on the lower pipe fitting (22) mentioned, so that the second hinge assembly (14) mentioned can rotate relative to the upper pipe fitting (12) mentioned, and the second hinge assembly (14) mentioned can rotate relative to the lower pipe fitting (22) mentioned.

9. A main frame (100) as described in claim 8, **characterized by** the second accommodating groove (122) which is provided at the connection between the upper pipe fitting (12) and the lower pipe fitting (22) mentioned, and the second accommodating groove (122) mentioned which is used for accommodating the second hinge assembly (14) mentioned.

10. A main frame (100) as described in claim 9, **characterized by** the second hinge assembly (14) mentioned which comprises a second front axle (140), a second rear axle (142) and a second hinge connecting piece (144);
the second front axle (140) mentioned is connected between the upper pipe fitting (12) mentioned and the second hinge connecting piece (144) mentioned, and the second rear axle (142) mentioned is connected between the second hinge connecting piece (144) mentioned and the lower pipe fitting (22) mentioned;
the second front axle (140) mentioned and the second rear axle (142) mentioned are arranged in parallel, and the distance between the axle center of the second front axle (140) mentioned and that of the second rear axle (142) mentioned is not less than the depth of the axle center embedded in the upper pipe fitting (12) mentioned and the lower pipe fitting (22) mentioned.

11. A main frame (100) as described in claim 10, **characterized by** the first front axle (130) mentioned and the first rear axle (132) mentioned which are located on a vertical plane, and the second front axle (140) mentioned and the second rear axle (142) mentioned which are located on another vertical plane when the folding bicycle (500) is unfolded and placed on a horizontal plane;
the first front axle (130) and the second front axle (140) mentioned present a preset angle, so that the axle of the front wheel (300) and the axle of the rear wheel (400) of the folding bicycle (500) can be aligned after the folding bicycle (500) is folded.

12. A main frame (100) as described in any one of claims 1 to 11, **characterized by** comprising a first driving device (18) and a second driving device (19);
the handle (17) mentioned is respectively connected with the first driving device (18) mentioned and the second driving device (19) mentioned;
the first driving device (18) mentioned is connected with the first hinge lock buckle (15) mentioned;
the second driving device (19) mentioned is connected with the second hinge lock buckle (16) mentioned;
when the handle (17) mentioned is pressed, the first driving device (18) mentioned can be made to drive the unlocking of the first hinge lock buckle (15), and meanwhile the second driving device (19) mentioned can be made to drive the unlocking of the second hinge lock buckle (16).

13. A main frame (100) as described in claim 12, **characterized by**:
the first driving device (18) mentioned which comprises a first pushing piece (180) and a first connecting rod (181);
the first pushing piece (180) mentioned which comprises a pushing rod and an inclined block;
the pushing rod mentioned bears against the first hinge lock buckle (15) mentioned, and the first pushing piece (180) mentioned which can move along the axial direction of the pushing rod mentioned;
one end of the first connecting rod (181) mentioned connected with the handle (17) mentioned, the first connecting rod (181) spring sleeved on the first connecting rod (181) mentioned, and the other end of the first connecting rod (181) mentioned provided with an inclined plane, which is in contact with the inclined block on the first pushing piece (180) mentioned;
when the main frame (100) mentioned is to be folded, the handle (17) mentioned is pressed to push the first connecting rod (181) mentioned to move upward, and the first connecting rod (181) mentioned pushes the first pushing piece (180) mentioned to move toward the outer side of the upper pipe fitting (12) mentioned to push the first hinge lock buckle (15) mentioned to open so as to complete the unlocking of the first hinge lock buckle (15) mentioned.

14. A main frame (100) as described in claim 13, **characterized by**:
both ends of the handle (17) mentioned facing the surface of the upper pipe fitting (12) mentioned which are provided with inclined planes;
the first driving device (18) mentioned which comprises a first bolt latch (182) and a first bolt latch connecting piece (183);
a first bolt latch spring (1820) installed on the first bolt latch (182) mentioned;
the first bolt latch connecting piece (183) mentioned which is equipped with the first bolt latch connecting piece spring (1830), and the contact surface between the first bolt latch (182) mentioned and the first bolt latch connecting piece (183) mentioned which is an inclined plane;
when the main frame (100) mentioned is folded, the connecting pipe fitting (11) mentioned releases the pressing on the first bolt latch connecting piece (183) mentioned, and the first bolt latch connecting piece spring (1830) mentioned pushes the first bolt latch connecting piece (183) mentioned to move forward; and the first bolt latch connecting piece (183) mentioned releases the pressing on the first bolt latch (182), and the first bolt latch connecting piece spring (1830) mentioned pushes the first bolt latch (182) mentioned to move downward;
the upper pipe fitting (12) mentioned is provided with a first moving groove (185); the first moving groove (185) mentioned is arranged along the axial direction of the upper pipe fitting (12) mentioned, the inner wall of which gradually shrinks from the rear end to the front end;
a first metal bolt (184) is installed in the first moving groove (185) mentioned, one end of the first metal bolt (184) mentioned is equipped with the first metal bolt spring (1840), and the first metal bolt (184) mentioned is connected with the inclined plane at one end of the handle (17) mentioned; one end the first metal bolt spring (1840) mentioned bears against the first metal bolt (184) mentioned, and the other end of the first metal bolt spring (1840) mentioned is installed on the inner wall of the first moving groove (185) mentioned; the first metal bolt spring (1840) mentioned is used to push the first metal bolt (184) mentioned to be against the connecting pipe fitting (11) mentioned;
a catch slot is provided on the first metal bolt (184) mentioned, and the first bolt latch spring (1820) mentioned can push the first bolt latch (182) mentioned to move downward, so that the first bolt latch (182) mentioned can fall into the catch slot provided on the first metal bolt (184) mentioned, to prevent the resetting of the first metal bolt (184) mentioned.

15. A main frame (100) as described in claim 14, **characterized by**:
the second driving device (19) mentioned comprising a second pushing piece (190) and a second connecting rod (191);
the second pushing piece (190) mentioned which comprises a pushing rod and an inclined block; the pushing rod of the second pushing piece (190) mentioned bears against the second hinge lock buckle (16) mentioned, so that the second pushing piece (190) mentioned can move along the axial direction of the pushing rod mentioned;
one end of the second connecting rod (191) mentioned is connected with one end of the handle (17) mentioned, the second connecting rod spring (1910) is sleeved on the second connecting rod (191) mentioned, the other end of the second connecting rod mentioned is provided with an inclined plane, and the inclined plane of the second connecting rod (191) mentioned is in contact with the inclined block on the second pushing piece (190) mentioned;
when the main frame (100) mentioned is to be folded, the handle (17) mentioned is pressed to push the second connecting rod (191) mentioned to move upward to push the second pushing piece (190) mentioned to move toward the outer side of the upper pipe fitting (12) mentioned to push the second hinge lock buckle (16) mentioned to open so as to complete the unlocking of the second hinge lock buckle (16) mentioned.

16. A main frame (100) as described in claim 15, **characterized by**:
the second driving device (19) mentioned comprising a second bolt latch (192) and a second bolt latch connecting piece (193);
the second bolt latch spring (1920) is installed on the second bolt latch (192) mentioned;
the second bolt latch connecting piece (193) mentioned is installed with the second bolt latch connecting piece spring (1930), and the contact surface between the second bolt latch (192) mentioned and the second bolt latch connecting piece (193) mentioned is an inclined plane;
when the main frame (100) mentioned is folded, the lower pipe fitting (22) mentioned releases the pressing on the second bolt latch connecting piece (193) mentioned, and the second bolt latch connecting piece spring (1930) mentioned pushes the second bolt latch connecting piece (193) to move backward; and the second bolt latch connecting piece (193) mentioned releases the pressing on the second bolt latch (192) mentioned, and the second bolt latch spring (1920) mentioned pushes the second bolt latch (192) mentioned to move downward;
the upper pipe fitting (12) mentioned is provided with a second moving groove (195); the second moving groove (195) mentioned is arranged along the axial direction of the upper pipe fitting (12) mentioned, and the inner wall of which gradually shrinks from the front end to the rear end;
a second metal bolt (194) is installed in the second moving groove (195) mentioned, one end of the second metal bolt (194) mentioned is equipped with the second metal bolt spring (1940), and the second metal bolt (194) mentioned is connected with the inclined plane at one end of the handle (17) mentioned;
one end of the second metal bolt spring (1940) mentioned bears against the second metal bolt (194) mentioned, and the other end of the second metal bolt spring (1940) mentioned is installed on the inner wall of the second moving groove (195) mentioned; the second metal bolt spring (1940) is used to push the second metal bolt (194) to be against the lower pipe fitting (22) mentioned;
a catch slot is provided on the second metal bolt (194) mentioned, and the second bolt latch spring (1920) can push the second bolt latch (192) mentioned to move downward, so that the second bolt latch (192) mentioned can fall into the catch slot provided on the second metal bolt (194) mentioned, to prevent the resetting of the second metal bolt (194) mentioned.

17. A folding bicycle (500), **characterized by** comprising the main frame (100) as described in any one of claims 1 to 16, a front frame (200), a front wheel (300) and a rear wheel (400);
the main frame (100) mentioned is connected with the front frame (200) mentioned;
the front wheel (300) mentioned is installed on the front frame (200) mentioned;
the rear wheel (400) mentioned is installed on the main frame (100) mentioned.

## Patentansprüche

1. Hauptrahmen (100) für ein Faltrad, der **dadurch gekennzeichnet ist, dass** er umfasst:
eine Verbindungsrohrmuffe (11);
eine obere Rohrmuffe (12); wobei die erwähnte obere Rohrmuffe (12) an der Verbindungsrohrmuffe (11) montiert ist und die erwähnte Verbindungsrohrmuffe (11) relativ zur erwähnten oberen Rohrmuffe (12) entfaltet oder gefaltet werden kann;
eine untere Rohrmuffe (22); wobei die erwähnte untere Rohrmuffe (22) an der erwähnten oberen Rohrmuffe (12) montiert ist und die erwähnte untere Rohrmuffe (22) relativ zur erwähnten oberen Rohrmuffe (12) entfaltet oder gefaltet werden kann;
ein erstes Scharnierverriegelungsschloss (15), das an der erwähnten oberen Rohrmuffe (12) montiert ist; das erwähnte erste Scharnierverriegelungsschloss (15) zum Verriegeln der erwähnten Verbindungsrohrmuffe (11) verwendet wird, wenn die erwähnte Verbindungsrohrmuffe (11) relativ zur erwähnten oberen Rohrmuffe (12) entfaltet wird;
ein zweites Scharnierverriegelungsschloss (16), das an der erwähnten oberen Rohrmuffe (12) montiert ist; das erwähnte zweite Scharnierverriegelungsschloss (16) zum Verriegeln der erwähnten unteren Rohrmuffe (22) verwendet wird, wenn die erwähnte untere Rohrmuffe (22) relativ zur erwähnten oberen Rohrmuffe (12) entfaltet wird;
einen Griff (17), der zum Verbinden des erwähnten ersten Scharnierverriegelungsschlosses (15) und des erwähnten zweiten Scharnierverriegelungsschlosses (16) verwendet wird; wenn das erste Scharnierverriegelungsschloss (15) die erwähnte Verbindungsrohrmuffe (11) verriegelt und das zweite Scharnierverriegelungsschloss (16) die erwähnte untere Rohrmuffe (22) verriegelt, der erwähnte Griff (17) zum Antreiben des Entriegelns sowohl des erwähnten ersten Scharnierverriegelungsschlosses (15) als auch des erwähnten zweiten Scharnierverriegelungsschlosses (16) verendet wird, sodass die erwähnte Verbindungsrohrmuffe (11) und die erwähnte untere Rohrmuffe (22) relativ zur erwähnten oberen Rohrmuffe (12) gefaltet werden können, und **dadurch gekennzeichnet, dass** das erwähnte erste Scharnierverriegelungsschloss (15) zum Verriegeln der Verbindungsrohrmuffe (11) verwendet wird, wenn die erwähnte Verbindungsrohrmuffe (11) relativ zur oberen Verbindungsmuffe (12) entfaltet wird; wobei das erwähnte erste Scharnierverriegelungsschloss (15) ein erstes Verriegelungsschloss-Übertragungselement (151), einen ersten Verriegelungsschloss-Hauptkörper (152) und ein erstes Verriegelungsschloss-Verbindungsstück (153) umfasst; das erwähnte erste Verriegelungsschloss-Verbindungsstück (153) zwischen dem erwähnten ersten Verriegelungsschloss-Übertragungselement (151) und dem erwähnten ersten Verriegelungsschloss-Hauptkörper (152) verbunden ist, sodass sich das erwähnte erste Verriegelungsschloss-Übertragungselement (151) um das erwähnte erste Verriegelungsschloss-Verbindungsstück (153) drehen kann und der erwähnte erste Verriegelungsschloss-Hauptkörper (152) sich um das erwähnte erste Verriegelungsschloss-Verbindungsstück (153) drehen kann; der erste Verriegelungsschloss-Hauptkörper (152) mit einem ersten Begrenzungsblock (1520) versehen ist; die Verbindungrohrmuffe (11) mit einer ersten Aufnahmenut (110) versehen ist, wobei die erste Aufnahmenut (110) zum Aufnehmen des erwähnten ersten Verriegelungsschloss-Hauptkörpers (152) verwendet wird und der Boden der ersten Aufnahmenut (110) mit einer ersten Begrenzungsnut (112) versehen ist; wenn das erste Scharnierverriegelungsschloss (15) verriegelt ist, der erste Begrenzungsblock (1520) in der ersten Begrenzungsnut (112) aufgenommen ist;
und das erwähnte zweite Scharnierverriegelungsschloss (16) ein zweites Verriegelungsschloss-Übertragungselement (161), einen zweiten Verriegelungsschlosskörper (162) und ein zweites Verriegelungsschloss-Verbindungsstück (163) umfasst; das erwähnte zweite Verriegelungsschloss-Verbindungsstück (163) zwischen dem erwähnten zweiten Verriegelungsschloss-Übertragungselement und dem erwähnten zweiten Verriegelungsschloss-Körper (162) verbunden ist, sodass sich das erwähnte zweite Verriegelungsschloss-Übertragungselement um das erwähnte zweite Verriegelungsschloss-Verbindungsstück (163) drehen kann und der erwähnte zweite Verriegelungsschlosskörper (162) sich um das erwähnte zweite Verriegelungsschloss-Verbindungsstück (163) drehen kann; der erwähnte zweite Verriegelungsschlosskörper (162) mit einem zweiten Begrenzungsblock versehen ist; die erwähnte untere Rohrmuffe (22) mit einer dritten Aufnahmenut (202) versehen ist, die zum Aufnehmen des erwähnten zweiten Verriegelungsschloss-Körpers (162) verwendet wird; der Boden der erwähnten dritten Aufnahmenut (202) mit einer zweiten Begrenzungsnut (204) versehen ist, und wenn das zweite Scharnierverriegelungsschloss (16) verriegelt ist, der zweite Begrenzungsblock in der zweiten Begrenzungsnut (204) aufgenommen ist.

2. Hauptrahmen (100) nach Anspruch 1, **gekennzeichnet durch** die erwähnte obere Rohrmuffe (12), die mit einer zweiten Aufnahmenut (122) versehen ist;
wobei die erwähnte erste Aufnahmenut (110) mit der erwähnten zweiten Aufnahmenut (122) verbunden ist;
die erwähnte zweite Aufnahmenut (122) zum Aufnehmen des erwähnten ersten Verriegelungsschloss-Übertragungselements (151) verwendet wird.

3. Hauptrahmen (100) nach Anspruch 1, **gekennzeichnet durch** die erwähnte untere Rohrmuffe (22), die mit einer vierten Aufnahmenut (126) versehen ist;
wobei die erwähnte dritte Aufnahmenut (202) mit der erwähnten vierten Aufnahmenut (126) verbunden ist;
die erwähnte vierte Aufnahmenut (126) zum Aufnehmen des erwähnten zweiten Verriegelungsschloss-Übertragungselements (161) verwendet wird.

4. Hauptrahmen (100) nach Anspruch 1, **dadurch gekennzeichnet, dass** er eine erste Scharnieranordnung (13) und eine zweite Scharnieranordnung (14) umfasst;
die erwähnte erste Scharnieranordnung (13) zwischen der erwähnten Verbindungsrohrmuffe (11) und der erwähnten oberen Rohrmuffe (12) verbunden ist, sodass sich die erwähnte Verbindungsrohrmuffe (11) relativ zur erwähnten oberen Rohrmuffe (12) drehen kann;
die erwähnte zweite Scharnieranordnung (14) zwischen der erwähnten unteren Rohrmuffe (22) und der erwähnten oberen Rohrmuffe (12) verbunden ist, sodass sich die erwähnte untere Rohrmuffe (22) relativ zur erwähnten oberen Rohrmuffe (12) drehen kann;
die erste Scharnieranordnung (13) und die zweite Scharnieranordnung (14) jeweils auf gegenüberliegenden Seiten der erwähnten oberen Rohrmuffe (12) angeordnet sind;
das erste Scharnierverriegelungsschloss (15) und das zweite Scharnierverriegelungsschloss (16) jeweils auf gegenüberliegenden Seiten der erwähnten oberen Rohrmuffe (12) angeordnet sind;
die erste Scharnieranordnung (13) und das erwähnte erste Scharnierverriegelungsschloss (15) sich jeweils auf gegenüberliegenden Seiten der erwähnten oberen Rohrmuffe (12) befinden.

5. Hauptrahmen (100) nach Anspruch 4, **dadurch gekennzeichnet, dass** ein Ende der erwähnten ersten Scharnieranordnung (13) an dem erwähnten Verbindungsrohr montiert ist und das andere Ende der erwähnten ersten Scharnieranordnung (13) an der erwähnten oberen Rohrmuffe (12) montiert ist, sodass sich die erwähnte erste Scharnieranordnung (13) relativ zur erwähnten Verbindungsrohrmuffe (11) drehen kann und sich die erwähnte erste Scharnieranordnung (13) relativ zur erwähnten oberen Rohrmuffe (12) drehen kann.

6. Hauptrahmen (100) nach Anspruch 5, **gekennzeichnet durch** die erste Aufnahmenut (110), die an der Verbindung zwischen der Verbindungsrohrmuffe (11) und der erwähnten oberen Rohrmuffe (12) bereitgestellt ist und zum Aufnehmende erwähnten ersten Scharnieranordnung (13) verwendet wird.

7. Hauptrahmen (100) nach Anspruch 6, **gekennzeichnet durch** die erwähnte erste Scharnieranordnung (13), die eine erste Vorderachse (130), eine erste Hinterachse (132) und ein erstes Scharnierverbindungsstück (134) umfasst;
die erwähnte erste Vorderachse (130) zwischen der erwähnten Verbindungsrohrmuffe (11) und dem erwähnten ersten Scharnierverbindungsstück (134) verbunden ist und die erwähnte erste Hinterachse (132) zwischen dem erwähnten ersten Scharnierverbindungsstück (134) und der erwähnten oberen Rohrmuffe (12) verbunden ist;
die erwähnte erste Vorderachse (130) und die erwähnte erste Hinterachse (132) parallel angeordnet sind und der Abstand zwischen der Achsmitte der erwähnten ersten Vorderachse (130) und der der erwähnten ersten Hinterachse (132) nicht kleiner als die Tiefe der Achsmitte ist, die in die erwähnte Verbindungsrohrmuffe (11) und die erwähnte obere Rohrmuffe (12) eingebettet ist.

8. Hauptrahmen (100) nach Anspruch 7, **dadurch gekennzeichnet, dass** ein Ende der erwähnten zweiten Scharnieranordnung (14), das an der erwähnten oberen Rohrmuffe (12) montiert ist und das andere Ende der erwähnten zweiten Scharnieranordnung (14) an der erwähnten unteren Rohrmuffe (22) montiert ist, sodass sich die erwähnte zweite Scharnieranordnung (14) relativ zur erwähnten oberen Rohrmuffe (12) drehen kann und sich die erwähnte zweite Scharnieranordnung (14) relativ zur erwähnten unteren Rohrmuffe (22) drehen kann.

9. Hauptrahmen (100) nach Anspruch 8, **gekennzeichnet durch** die zweite Aufnahmenut (122), die an der erwähnten Verbindung zwischen der erwähnten oberen Rohrmuffe (12) und der erwähnten unteren Rohrmuffe (22) bereitgestellt ist, und die erwähnte zweite Aufnahmenut (122), die zum Aufnehmen der erwähnten zweiten Scharnieranordnung (14) verwendet wird.

10. Hauptrahmen (100) nach Anspruch 9, **gekennzeichnet durch** die erwähnte zweite Scharnieranordnung (14), die eine zweite Vorderachse (140), eine erste Hinterachse (142) und ein zweites Scharnierverbindungsstück (144) umfasst;
die erwähnte zweite Vorderachse (140) zwischen der erwähnten oberen Rohrmuffe (12) und dem erwähnten zweiten Scharnierverbindungsstück (144) verbunden ist und die erwähnte zweite Hinterachse (142) zwischen dem erwähnten zweiten Scharnierverbindungsstück (144) und der erwähnten unteren Rohrmuffe (22) verbunden ist;
die erwähnte zweite Vorderachse (140) und die erwähnte zweite Hinterachse (142) parallel angeordnet sind und der Abstand zwischen der Achsmitte der erwähnten zweiten Vorderachse (140) und der der erwähnten zweiten Hinterachse (142) nicht kleiner als die Tiefe der Achsmitte ist, die in die erwähnte obere Rohrmuffe (12) und die erwähnte untere Rohrmuffe (22) eingebettet ist.

11. Hauptrahmen (100) nach Anspruch 10, **gekennzeichnet durch** die erwähnte erste Vorderachse (130) und die erwähnte erste Hinterachse (132), die sich auf einer vertikalen Ebene befinden, und die erwähnte zweite Vorderachse (140) und die erwähnte zweite Hinterachse (142), die sich auf einer weiteren vertikalen Ebene befinden, wenn das Faltfahrrad (500) entfaltet und auf einer horizontalen Ebene platziert ist;
die erwähnte erste Vorderachse (130) und die zweite Vorderachse (140) einen voreingestellten Winkel darstellen, sodass die Achse des Vorderrads (300) und die Achse des Hinterrads (400) des Faltrads (500) ausgerichtet werden können, nachdem das Faltrad (500) gefaltet ist.

12. Hauptrahmen (100) nach einem der Ansprüche 1 bis 11, **dadurch gekennzeichnet, dass** er eine erste Antriebsvorrichtung (18) und eine zweite Antriebsvorrichtung (19) umfasst;
der erwähnte Griff (17) jeweils mit der erwähnten ersten Antriebsvorrichtung (18) und der erwähnten zweiten Antriebsvorrichtung (19) verbunden ist;
die erwähnte erste Antriebsvorrichtung (18) mit dem erwähnten ersten Scharnierverriegelungsschloss (15) verbunden ist;
die erwähnte zweite Antriebsvorrichtung (19) mit dem erwähnten zweiten Scharnierverriegelungsschloss (16) verbunden ist;
wenn der erwähnte Griffs (17) gedrückt wird, die erste Antriebsvorrichtung (18) zum Antreiben des Entriegelns des ersten Scharnierverschlusses (15) und gleichzeitig die zweite Antriebsvorrichtung (19) zum Antreiben des Entriegelns des zweiten Scharnierverschlusses (16) gebracht werden kann.

13. Hauptrahmen (100) nach Anspruch 12, **gekennzeichnet durch**:
die erwähnte erste Antriebsvorrichtung (18), die ein erstes Schubstück (180) und eine erste Verbindungsstange (181) umfasst;
das erwähnte erste Schubstück (180), das eine Schubstange und einen geneigten Block umfasst;
wobei die erwähnte Schubstange an dem erwähnten ersten Scharnierverriegelungsschloss (15) und dem erwähnten ersten Schubstück (180) anliegt, das sich entlang der axialen Richtung der erwähnten Schubstange bewegen kann;
ein Ende der erwähnten ersten Verbindungsstange (181) mit dem erwähnten Griff (17) verbunden ist, wobei die erste Verbindungsstange (181) über eine Federhülse an der erwähnten ersten Verbindungsstange (181) anliegt und das andere Ende der ersten Verbindungsstange (181) mit einer geneigten Ebene versehen ist, die mit dem geneigten Block an dem erwähnten ersten Schubstück (180) in Kontakt steht;
wenn der erwähnte Hauptrahmen (100) gefaltet werden soll, der erwähnte Griff (17) gedrückt wird, um die erwähnte erste Verbindungsstange (181) nach oben zu drücken und die erwähnte erste Verbindungsstange (181) das erste Schubstück (180) drückt, sodass es sich zur Außenseite des oberen Rohrmuffe (12) bewegt, um das erste Scharnierverriegelungsschloss (15) zum Öffnen zu drücken, um so das Entriegeln des ersten Scharnierverriegelungsschlosses (15) abzuschließen.

14. Hauptrahmen (100) nach Anspruch 13, **gekennzeichnet durch**:
beide Enden des erwähnten Griffs (17), die der Oberfläche der erwähnten oberen Rohrmuffe (12) zugewandt und mit geneigten Ebenen versehen sind;
die erwähnte erste Antriebsvorrichtung (18), die eine ersten Bolzenklinke (182) und ein erstes Bolzenklinken-Verbindungsstück (183) umfasst;
eine erste Bolzenklinkenfeder (1820), die an der erwähnten ersten Bolzenklinke (182) montiert ist;
das erwähnte erste Bolzenklinken-Verbindungsstück (183), das mit der ersten Bolzenklinken-Verbindungsstückfeder (1830) ausgestattet ist, und die Kontaktoberfläche zwischen der erwähnten ersten Bolzenklinke (182) und dem erwähnten ersten Bolzenklinken-Verbindungsstück (183), die eine gedeckte Ebene ist;
wenn der erwähnte Hauptrahmen (100) gefaltet ist, die erwähnte Verbindungsrohrmuffe (11) den Druck auf das erwähnte erste Bolzenklinken-Verbindungsstück (183) aufhebt und die erwähnte erste Bolzenklinken-Verbindungsstückfeder (1830) das erwähnte erste Bolzenklinken-Verbindungsstück (183) drückt, sodass es sich vorwärts bewegt; und das erwähnte erste Bolzenklinken-Verbindungsstück (183) den Druck auf die erste Bolzenklinke (182) aufhebt und die erwähnte erste Bolzenklinken-Verbindungsstückfeder (1830) die erwähnte erste Bolzenklinke (182) so drückt, dass sie sich nach unten bewegt;
die erwähnte obere Rohrmuffe (12) mit einer ersten beweglichen Nut (185) versehen ist; die erwähnte erste bewegliche Nut (185) entlang der axialen Richtung der erwähnten oberen Rohrmuffe (12) angeordnet ist, deren Innenwand vom hinteren Ende zum vorderen Ende allmählich schrumpft;
ein erster Metallbolzen (184) in der erwähnten ersten beweglichen Nut (185) montiert ist, ein Ende des erwähnten ersten Metallbolzens (184) mit der ersten Metallbolzenfeder (1840) ausgestattet ist und der erwähnte erste Metallbolzen (184) mit der geneigten Ebene an einem Ende des erwähnten Griffs (17) verbunden ist; ein Ende der erwähnten ersten Metallbolzenfeder (1840) am erwähnten ersten Metallbolzen (184) anliegt und das andere Ende der erwähnten ersten Metallbolzenfeder (1840) an der Innenwand der erwähnten ersten beweglichen Nut (185) montiert ist; die erwähnte erste Metallbolzenfeder (1840) verwendet wird, um den erwähnten ersten Metallbolzen (184) gegen die erwähnte Verbindungsrohrmuffe (11) zu drücken;
ein Fangschlitz am erwähnten ersten Metallbolzen (184) bereitgestellt ist und die erwähnte erste Bolzenklinkenfeder (1820) die erwähnte erste Bolzenklinke (182) drücken kann, sodass sie sich nach unten bewegt, sodass die erwähnte erste Bolzenklinke (182) in den am erwähnten ersten Metallbolzen (184) bereitgestellten Fangschlitz fallen kann, um ein Zurücksetzen des erwähnten ersten Metallbolzens (184) zu verhindern.

15. Hauptrahmen (100) nach Anspruch 14, **gekennzeichnet durch**:
die erwähnte zweite Antriebsvorrichtung (19), die ein zweites Schubstück (190) und eine zweite Verbindungsstange (191) umfasst;
das erwähnte zweite Schubstück (190), das eine Schubstange und einen geneigten Block umfasst; die Schubstange des erwähnten zweiten Schubstücks (190), die an dem erwähnten zweiten Scharnierverriegelungsschloss (16) anliegt, sodass sich das erwähnte zweite Schubstück (190) entlang der axialen Richtung der erwähnten Schubstange bewegen kann;
ein Ende der erwähnten zweiten Verbindungsstange (191), das mit einem Ende des erwähnten Griffs (17) verbunden ist, die zweite Verbindungsstangenfeder (1910) auf die erwähnte zweite Verbindungsstange (191) aufgesteckt ist, das andere Ende der erwähnten zweiten Verbindungsstange mit einer geneigten Ebene versehen ist und die geneigte Ebene der erwähnten zweiten Verbindungsstange (191) in Kontakt mit dem geneigten Block am zweiten Schubstück (190) steht;
wenn der Hauptrahmen (100) gefaltet werden soll, der Griff (17) gedrückt wird, um die erwähnte zweite Verbindungsstange (191) nach oben zu drücken und das erwähnte zweite Schubstück (190) zu drücken, sodass es sich in Richtung der Außenseite der erwähnten oberen Rohrmuffe (12) bewegt, um das erwähnte zweite Scharnierverriegelungsschloss (16) zum Öffnen zu drücken, um so das Entriegeln des erwähnten zweiten Scharnierverriegelungsschlosses (16) abzuschließen.

16. Hauptrahmen (100) nach Anspruch 15, **gekennzeichnet durch**:
die erwähnte zweite Antriebsvorrichtung (19), die eine zweite Bolzenklinke (192) und ein zweites Bolzenklinken-Verbindungsstück (193) umfasst;
die zweite Bolzenklinkenfeder (1920), die an der erwähnten zweiten Bolzenklinke (192) montiert ist;
das erwähnte zweite Bolzenklinken-Verbindungsstück (193), das mit der zweiten Bolzenklinken-Verbindungsstückfeder (1930) montiert ist, und die Kontaktoberfläche zwischen der erwähnten zweiten Bolzenklinke (192) und dem erwähnten zweiten Bolzenklinken-Verbindungsstück (193), die eine geneigte Ebene ist;
wenn der erwähnte Hauptrahmen (100) gefaltet ist, die erwähnte untere Rohrmuffe (22) den Druck auf das erwähnte zweite Bolzenklinken-Verbindungsstück (193) aufhebt und die erwähnte zweit Bolzenklinken-Verbindungsstückfeder (1930) das erwähnte zweite Bolzenklinken-Verbindungsstück (193) drückt, sodass es sich rückwärts bewegt; und das erwähnte zweite Bolzenklinken-Verbindungsstück (193) den Druck auf die erwähnte zweite Bolzenklinke (192) aufhebt und die erwähnte zweite Bolzenklinkenfeder (1920) die erwähnte zweite Bolzenklinke (192) so drückt, dass sie sich nach unten bewegt;
die erwähnte obere Rohrmuffe (12) mit einer zweiten beweglichen Nut (195) versehen ist; die erwähnte zweite bewegliche Nut (195) entlang der axialen Richtung der erwähnten oberen Rohrmuffe (12) angeordnet ist, deren Innenwand vom vorderen Ende zum hinteren Ende allmählich schrumpft;
ein zweiter Metallbolzen (194) in der erwähnten zweiten beweglichen Nut (195) montiert ist, ein Ende des erwähnten zweiten Metallbolzens (194) mit der zweiten Metallbolzenfeder (1940) ausgestattet ist und der erwähnte zweite Metallbolzen (194) mit der geneigten Ebene an einem Ende des erwähnten Griffs (17) verbunden ist;
ein Ende der erwähnten zweiten Metallbolzenfeder (1940) am erwähnten zweiten Metallbolzen (194) anliegt und das andere Ende der erwähnten zweiten Metallbolzenfeder (1940) an der Innenwand der erwähnten zweiten beweglichen Nut (195) montiert ist; die zweite Metallbolzenfeder (1940) verwendet wird, um den zweiten Metallbolzen (194) gegen die erwähnte untere Rohrmuffe (22) zu drücken;
ein Fangschlitz am erwähnten zweiten Metallbolzen (194) bereitgestellt ist und die zweite Bolzenklinkenfeder (1920) die erwähnte zweite Bolzenklinke (192) drücken kann, sodass sie sich nach unten bewegt, sodass die erwähnte zweite Bolzenklinke (192) in den am erwähnten zweiten Metallbolzen (194) bereitgestellten Fangschlitz fallen kann, um ein Zurücksetzen des erwähnten zweiten Metallbolzens (194) zu verhindern.

17. Faltrad (500), **dadurch gekennzeichnet, dass** es den Hauptrahmen (100) nach einem der Ansprüche 1 bis 16, einen Vorderrahmen (200), ein Vorderrad (300) und ein Hinterrad (400) umfasst;
der erwähnte Hauptrahmen (100) mit dem erwähnten Vorderrahmen (200) verbunden ist;
das erwähnte Vorderrad (300) am erwähnten Vorderrahmen (200) montiert ist;
das erwähnte Hinterrad (400) am erwähnten Hauptrahmen (100) montiert ist.

## Revendications

1. Cadre principal (100) pour une bicyclette pliante, qui est **caractérisé en ce qu'**il comprend :
un raccord de tuyau de liaison (11) ;
un raccord de tuyau supérieur (12) ; le raccord de tuyau supérieur (12) mentionné est installé sur le raccord de tuyau de liaison (11), et le raccord de tuyau de liaison (11) mentionné peut être déplié ou plié par rapport au raccord de tuyau supérieur (12) mentionné ;
un raccord de tuyau inférieur (22) ; le raccord de tuyau inférieur (22) mentionné est installé sur le raccord de tuyau supérieur (12) mentionné, et le raccord de tuyau inférieur (22) mentionné peut être déplié ou plié par rapport au raccord de tuyau supérieur (12) mentionné ;
une première boucle de verrouillage à charnière (15), qui est installée sur le raccord de tuyau supérieur (12) mentionné ; la première boucle de verrouillage à charnière (15) mentionnée est utilisée pour verrouiller le raccord de tuyau de liaison (11) mentionné lorsque le raccord de tuyau de liaison (11) mentionné est déplié par rapport au raccord de tuyau supérieur (12) mentionné ;
une seconde boucle de verrouillage à charnière (16), qui est installée sur le raccord de tuyau supérieur (12) mentionné ; la seconde boucle de verrouillage à charnière (16) mentionnée est utilisée pour verrouiller le raccord de tuyau inférieur (22) mentionné lorsque le raccord de tuyau inférieur (22) mentionné est déplié par rapport au raccord de tuyau supérieur (12) mentionné ;
une poignée (17), qui est utilisée pour relier la première boucle de verrouillage à charnière (15) mentionnée et la seconde boucle de verrouillage à charnière (16) mentionnée; lorsque la première boucle de verrouillage à charnière (15) mentionnée verrouille le raccord de tuyau de liaison (11) mentionné et que la seconde boucle de verrouillage à charnière (16) mentionnée verrouille le raccord de tuyau inférieur (22) mentionné, la poignée (17) mentionnée est utilisée pour entraîner le déverrouillage à la fois de la première boucle de verrouillage à charnière (15) mentionnée et de la seconde boucle de verrouillage à charnière (16) mentionnée, de sorte que le raccord de tuyau de liaison (11) mentionné et le raccord de tuyau inférieur (22) mentionné peuvent être pliés par rapport au raccord de tuyau supérieur (12) mentionné et **caractérisé en ce que** la première boucle de verrouillage à charnière (15) mentionnée est utilisée pour verrouiller le raccord de tuyau de liaison (11) mentionné lorsque le raccord de tuyau de liaison (11) mentionné est déplié par rapport au raccord de tuyau supérieur (12) mentionné ; dans lequel la première boucle de verrouillage à charnière (15) mentionnée comprend un premier élément de transmission de boucle de verrouillage (151), un premier corps principal de boucle de verrouillage (152) et une première pièce de liaison de boucle de verrouillage (153) ; la première pièce de liaison de boucle de verrouillage (153) mentionnée est reliée entre le premier élément de transmission de boucle de verrouillage (151) mentionné et le premier corps principal de boucle de verrouillage (152) mentionné, de sorte que le premier élément de transmission de boucle de verrouillage (151) mentionné peut tourner autour de la première pièce de liaison de boucle de verrouillage (153) mentionnée, et le premier corps principal de boucle de verrouillage (152) mentionné peut tourner autour de la première pièce de liaison de boucle de verrouillage (153) mentionnée ; le premier corps principal de boucle de verrouillage (152) est pourvu d'un premier bloc de limite (1520) ; le raccord de tuyau de liaison (11) mentionné est pourvu d'une première rainure de réception (110), la première rainure de réception (110) mentionnée est utilisée pour recevoir le premier corps principal de boucle de verrouillage (152) mentionné, et le fond de la première rainure de réception (110) mentionnée est pourvu d'une première rainure de limite (112); lorsque la première boucle de verrouillage à charnière (15) est verrouillée, le premier bloc de limite (1520) est reçu dans la première rainure de limite (112) ;
et la seconde boucle de verrouillage à charnière (16) mentionnée comprenant un second élément de transmission de boucle de verrouillage (161), un second corps de boucle de verrouillage (162) et une seconde pièce de liaison de boucle de verrouillage (163) ; la seconde pièce de liaison de boucle de verrouillage (163) mentionnée est reliée entre le second élément de transmission de boucle mentionné et le second corps de boucle de verrouillage (162) mentionné, de sorte que le second élément de transmission de boucle mentionné peut tourner autour de la seconde pièce de liaison de boucle de verrouillage (163) mentionnée, et le second corps de boucle de verrouillage (162) mentionné peut tourner autour de la seconde pièce de liaison de boucle de verrouillage (163) mentionnée; le second corps de boucle de verrouillage (162) mentionné est pourvu d'un second bloc de limite ; le raccord de tuyau inférieur (22) mentionné est pourvu d'une troisième rainure de réception (202), qui est utilisée pour recevoir le second corps de boucle de verrouillage (162) mentionné ; le fond de la troisième rainure de réception (202) mentionnée est pourvu d'une seconde rainure de limite (204), et lorsque la seconde boucle de verrouillage à charnière (16) est verrouillée, le second bloc de limite est reçu dans la seconde rainure de limite (204).

2. Cadre principal (100) selon la revendication 1, **caractérisé par** le raccord de tuyau supérieur (12) mentionné qui est pourvu d'une deuxième rainure de réception (122) ;
la première rainure de réception (110) mentionnée est reliée à la deuxième rainure de réception (122) mentionnée ;
la deuxième rainure de réception (122) mentionnée est utilisée pour recevoir le premier élément de transmission de boucle de verrouillage (151) mentionné.

3. Cadre principal (100) selon la revendication 1, **caractérisé par** le raccord de tuyau inférieur (22) mentionné qui est pourvu d'une quatrième rainure de réception (126) ;
la troisième rainure de réception (202) mentionnée est reliée à la quatrième rainure de réception (126) mentionnée ;
la quatrième rainure de réception (126) mentionnée est utilisée pour recevoir le seconde élément de transmission de boucle de verrouillage (161) mentionné.

4. Cadre principal (100) selon la revendication 1, **caractérisé en ce qu'**il comprend un premier ensemble charnière (13) et un second ensemble charnière (14) ;
le premier ensemble charnière (13) mentionné est relié entre le raccord de tuyau de liaison (11) mentionné et le raccord de tuyau supérieur (12) mentionné, de sorte que le raccord de tuyau de liaison (11) mentionné peut tourner par rapport au raccord de tuyau supérieur (12) mentionné ;
le second ensemble charnière (14) mentionné est relié entre le raccord de tuyau inférieur (22) mentionné et le raccord de tuyau supérieur (12) mentionné, de sorte que le raccord de tuyau inférieur (22) mentionné peut tourner par rapport au raccord de tuyau supérieur (12) mentionné ;
le premier ensemble charnière (13) et le second ensemble charnière (14) mentionnés sont situés respectivement sur des côtés opposés du raccord de tuyau supérieur (12) mentionné ;
la première boucle de verrouillage à charnière (15) et la seconde boucle de verrouillage à charnière (16) mentionnées sont situées respectivement sur des côtés opposés du raccord de tuyau supérieur (12) mentionné ;
le premier ensemble charnière (13) et la première boucle de verrouillage à charnière (15) mentionnés sont situés respectivement sur des côtés opposés du raccord de tuyau supérieur (12) mentionné.

5. Cadre principal (100) selon la revendication 4, **caractérisé par** une extrémité du premier ensemble charnière (13) mentionné qui est installée sur le tuyau de liaison mentionné, et l'autre extrémité du premier ensemble charnière (13) mentionné qui est installée sur le raccord de tuyau supérieur (12) mentionné, de sorte que le premier ensemble charnière (13) mentionné peut tourner par rapport au raccord de tuyau de liaison (11) mentionné, et le premier ensemble charnière (13) mentionné peut tourner par rapport au raccord de tuyau supérieur (12) mentionné.

6. Cadre principal (100) selon la revendication 5, **caractérisé par** la première rainure de réception (110) qui est prévue au niveau de la liaison entre le raccord de tuyau de liaison (11) et le raccord de tuyau supérieur (12) mentionné, utilisée pour recevoir le premier ensemble charnière (13) mentionné.

7. Cadre principal (100) selon la revendication 6, **caractérisé par** le premier ensemble charnière (13) mentionné qui comprend un premier essieu avant (130), un premier essieu arrière (132) et une première pièce de liaison de charnière (134) ;
le premier essieu avant (130) mentionné est relié entre le raccord de tuyau de liaison (11) mentionné et la première pièce de liaison de charnière (134) mentionnée, et le premier essieu arrière (132) mentionné est relié entre la première pièce de liaison de charnière (134) et le raccord de tuyau supérieur (12) mentionné ;
le premier essieu avant (130) mentionné et le premier essieu arrière (132) mentionné sont agencés en parallèle, et la distance entre le centre de l'essieu du premier essieu avant (130) mentionné et celui du premier essieu arrière (132) mentionné n'est pas inférieure à la profondeur du centre de l'essieu encastré dans le raccord de tuyau de liaison (11) mentionné et le raccord de tuyau supérieur (12) mentionné.

8. Cadre principal (100) selon la revendication 7, **caractérisé par** une extrémité du second ensemble charnière (14) mentionné qui est installée sur le raccord de tuyau supérieur (12) mentionné, et l'autre extrémité du second ensemble charnière (14) mentionné qui est installée sur le raccord de tuyau inférieur (22) mentionné, de sorte que le second ensemble charnière (14) mentionné peut tourner par rapport au raccord de tuyau supérieur (12) mentionné, et le second ensemble charnière (14) mentionné peut tourner par rapport au raccord de tuyau inférieur (22) mentionné.

9. Cadre principal (100) selon la revendication 8, **caractérisé par** la deuxième rainure de réception (122) qui est prévue au niveau de la liaison entre le raccord de tuyau supérieur (12) et le raccord de tuyau inférieur (22) mentionné, et la deuxième rainure de réception (122) mentionnée qui est utilisée pour recevoir le second ensemble charnière (14) mentionné.

10. Cadre principal (100) selon la revendication 9, **caractérisé par** le second ensemble charnière (14) mentionné qui comprend un second essieu avant (140), un second essieu arrière (142) et une seconde pièce de liaison de charnière (144) ;
le second essieu avant (140) mentionné est relié entre le raccord de tuyau supérieur (12) mentionné et la seconde pièce de liaison de charnière (144) mentionnée, et le second essieu arrière (142) mentionné est relié entre la seconde pièce de liaison de charnière (144) mentionnée et le raccord de tuyau inférieur (22) mentionné ;
le second essieu avant (140) mentionné et le second essieu arrière (142) mentionné sont agencés en parallèle, et la distance entre le centre de l'essieu du second essieu avant (140) mentionné et celui du second essieu arrière (142) mentionné n'est pas inférieure à la profondeur du centre de l'essieu encastré dans le raccord de tuyau supérieur (12) mentionné et le raccord de tuyau inférieur (22) mentionné.

11. Cadre principal (100) selon la revendication 10, **caractérisé par** le premier essieu avant (130) mentionné et le premier essieu arrière (132) mentionné qui sont situés sur un plan vertical, et le second essieu avant (140) mentionné et le second essieu arrière (142) mentionné qui sont situés sur un autre plan vertical lorsque la bicyclette pliante (500) est dépliée et placée sur un plan horizontal ;
le premier essieu avant (130) et le second essieu avant (140) mentionnés présentent un angle prédéfini, de sorte que l'essieu de la roue avant (300) et l'essieu de la roue arrière (400) de la bicyclette pliante (500) peuvent être alignés une fois la bicyclette pliante (500) pliée.

12. Cadre principal (100) tel que décrit dans l'une quelconque des revendications 1 à 11, **caractérisé en ce qu'**il comprend un premier dispositif d'entraînement (18) et un second dispositif d'entraînement (19) ;
la poignée (17) mentionnée est respectivement reliée au premier dispositif d'entraînement (18) mentionné et au second dispositif d'entraînement (19) mentionné ;
le premier dispositif d'entraînement (18) mentionné est relié à la première boucle de verrouillage à charnière (15) mentionnée ;
le second dispositif d'entraînement (19) mentionné est relié à la seconde boucle de verrouillage à charnière (16) mentionnée ;
lorsque la poignée (17) mentionnée est pressée, le premier dispositif d'entraînement (18) mentionné peut être amené à entraîner le déverrouillage de la première boucle de verrouillage à charnière (15), et entre-temps, le second dispositif d'entraînement (19) mentionné peut être amené à entraîner le déverrouillage de la seconde boucle de verrouillage à charnière (16).

13. Cadre principal (100) selon la revendication 12, **caractérisé par** :
le premier dispositif d'entraînement (18) mentionné qui comprend une première pièce de poussée (180) et une première bielle (181) ;
la première pièce de poussée (180) mentionnée qui comprend une tige de poussée et un bloc incliné ;
la tige de poussée mentionnée s'appuie contre la première boucle de verrouillage à charnière (15) mentionnée, et la première pièce de poussée (180) mentionnée qui peut se déplacer le long de la direction axiale de la tige de poussée mentionnée ;
une extrémité de la première bielle (181) mentionnée reliée à la poignée (17) mentionnée, la première bielle (181) emmanchée par ressort sur la première bielle (181) mentionnée, et l'autre extrémité de la première bielle (181) mentionnée munie d'un plan incliné, qui est en contact avec le bloc incliné sur la première pièce de poussée (180) mentionnée ;
lorsque le cadre principal (100) mentionné doit être plié, la poignée (17) mentionnée est pressée pour pousser la première bielle (181) mentionnée à se déplacer vers le haut, et la première bielle (181) mentionnée pousse la première pièce de poussée (180) mentionnée à se déplacer vers le côté externe du raccord de tuyau supérieur (12) mentionné pour pousser la première boucle de verrouillage à charnière (15) mentionnée à s'ouvrir de manière à achever le déverrouillage de la première boucle de verrouillage à charnière (15) mentionnée.

14. Cadre principal (100) selon la revendication 13, **caractérisé par** :
les deux extrémités de la poignée (17) mentionnée faisant face à la surface du raccord de tuyau supérieur (12) mentionné qui sont pourvues de plans inclinés ;
le premier dispositif d'entraînement (18) mentionné qui comprend un premier verrou à pêne (182) et une première pièce de liaison de verrou à pêne (183) ;
un premier ressort de verrou à pêne (1820) installé sur le premier verrou à pêne (182) mentionné ;
la première pièce de liaison de verrou à pêne (183) mentionnée qui est équipée du premier ressort de pièce de liaison de verrou à pêne (1830), et la surface de contact entre le premier verrou à pêne (182) mentionné et la première pièce de liaison de verrou à pêne (183) mentionnée qui est un plan incliné ;
lorsque le cadre principal (100) mentionné est plié, le raccord de tuyau de liaison (11) mentionné libère la pression sur la première pièce de liaison de verrou à pêne (183) mentionnée, et le premier ressort de pièce de liaison de verrou à pêne (1830) mentionné pousse la première pièce de liaison de verrou à pêne (183) mentionnée à se déplacer vers l'avant ; et la première pièce de liaison de verrou à pêne (183) mentionnée libère la pression sur le premier verrou à pêne (182), et le premier ressort de pièce de liaison de verrou à pêne (1830) mentionné pousse le premier verrou à pêne (182) mentionné à se déplacer vers le bas ;
le raccord de tuyau supérieur (12) mentionné est pourvu d'une première rainure mobile (185) ; la première rainure mobile (185) mentionnée est agencée le long de la direction axiale du raccord de tuyau supérieur (12) mentionné, dont la paroi interne se rétrécit progressivement de l'extrémité arrière vers l'extrémité avant ;
un premier pêne métallique (184) est installé dans la première rainure mobile (185) mentionnée, une extrémité du premier pêne métallique (184) mentionné est équipée du premier ressort de pêne métallique (1840), et le premier pêne métallique (184) mentionné est relié au plan incliné au niveau d'une extrémité de la poignée (17) mentionnée ; une extrémité du premier ressort de pêne métallique (1840) mentionné s'appuie contre le premier pêne métallique (184) mentionné, et l'autre extrémité du premier ressort de pêne métallique (1840) mentionné est installée sur la paroi interne de la première rainure mobile (185) mentionnée ; le premier ressort de pêne métallique (1840) mentionné est utilisé pour pousser le premier pêne métallique (184) mentionné à être contre le raccord de tuyau de liaison (11) mentionné ;
une fente de capture est prévue sur le premier pêne métallique (184) mentionné, et le premier ressort de verrou à pêne (1820) mentionné peut pousser le premier verrou à pêne (182) mentionné à se déplacer vers le bas, de sorte que le premier verrou à pêne (182) mentionné peut tomber dans la fente de capture prévue sur le premier pêne métallique (184) mentionné, pour empêcher le réarmement du premier pêne métallique (184) mentionné.

15. Cadre principal (100) selon la revendication 14, **caractérisé par** :
le second dispositif d'entraînement (19) mentionné comprenant une seconde pièce de poussée (190) et une seconde bielle (191) ;
la seconde pièce de poussée (190) mentionnée qui comprend une tige de poussée et un bloc incliné ; la tige de poussée de la seconde pièce de poussée (190) mentionnée s'appuie contre la seconde boucle de verrouillage à charnière (16) mentionnée, de sorte que la seconde pièce de poussée (190) mentionnée peut se déplacer le long de la direction axiale de la tige de poussée mentionnée ;
une extrémité de la seconde bielle (191) mentionnée est reliée à une extrémité de la poignée (17) mentionnée, le second ressort de bielle (1910) est emmanché sur la seconde bielle (191) mentionnée, l'autre extrémité de la seconde bielle mentionnée est pourvue d'un plan incliné, et le plan incliné de la seconde bielle (191) mentionnée est en contact avec le bloc incliné sur la seconde pièce de poussée (190) mentionnée ;
lorsque le cadre principal (100) mentionné doit être plié, la poignée (17) mentionnée est pressée pour pousser la seconde bielle (191) mentionnée à se déplacer vers le haut pour pousser la seconde pièce de poussée (190) mentionnée à se déplacer vers le côté externe du raccord de tuyau supérieur (12) mentionné pour pousser la seconde boucle de verrouillage à charnière (16) mentionnée à s'ouvrir de manière à achever le déverrouillage de la seconde boucle de verrouillage à charnière (16) mentionnée.

16. Cadre principal (100) selon la revendication 15, **caractérisé par** :
le second dispositif d'entraînement (19) mentionné comprenant un second verrou à pêne (192) et une seconde pièce de connexion de verrou à pêne (193) ;
le second ressort de verrou à pêne (1920) est installé sur le second verrou à pêne (192) mentionné ;
la seconde pièce de liaison de verrou à pêne (193) mentionnée est installée avec le second ressort de pièce de liaison de verrou à pêne (1930), et la surface de contact entre le second verrou à pêne (192) mentionné et la seconde pièce de liaison de verrou à pêne (193) mentionnée est un plan incliné ;
lorsque le cadre principal (100) mentionné est plié, le raccord de tuyau inférieur (22) mentionné libère la pression sur la seconde pièce de liaison de verrou à pêne (193) mentionnée, et le second ressort de pièce de liaison de verrou à pêne (1930) mentionné pousse la seconde pièce de liaison de verrou à pêne (193) à se déplacer vers l'arrière ; et la seconde pièce de liaison de verrou à pêne (193) mentionnée libère la pression sur le second verrou à pêne (192) mentionné, et le second ressort de verrou à pêne (1920) mentionné pousse le second verrou à pêne (192) mentionné à se déplacer vers le bas ;
le raccord de tuyau supérieur (12) mentionné est pourvu d'une seconde rainure mobile (195) ; la seconde rainure mobile (195) mentionnée est agencée le long de la direction axiale du raccord de tuyau supérieur (12) mentionné, et dont la paroi interne se rétrécit progressivement de l'extrémité avant vers l'extrémité arrière ;
un second pêne métallique (194) est installé dans la seconde rainure mobile (195) mentionnée, une extrémité du second pêne métallique (194) mentionné est équipée du second ressort de pêne métallique (1940), et le second pêne métallique (194) mentionné est relié au plan incliné au niveau d'une extrémité de la poignée (17) mentionnée ;
une extrémité du second ressort de pêne métallique (1940) mentionné s'appuie contre le second pêne métallique (194) mentionné, et l'autre extrémité du second ressort de pêne métallique (1940) mentionné est installée sur la paroi interne de la seconde rainure mobile (195) mentionnée ; le second ressort de pêne métallique (1940) est utilisé pour pousser le second pêne métallique (194) à être contre le raccord de tuyau inférieur (22) mentionné ;
une fente de capture est prévue sur le second pêne métallique (194) mentionné, et le second ressort de verrou à pêne (1920) mentionné peut pousser le second verrou à pêne (192) mentionné à se déplacer vers le bas, de sorte que le second verrou à pêne (192) mentionné peut tomber dans la fente de capture prévue sur le second pêne métallique (194) mentionné, pour empêcher le réarmement du second pêne métallique (194) mentionné.

17. Bicyclette pliante (500), **caractérisée en ce qu'**elle comprend le cadre principal (100) tel que décrit dans l'une quelconque des revendications 1 à 16, un cadre avant (200), une roue avant (300) et une roue arrière (400) ;
le cadre principal (100) mentionné est relié au cadre avant (200) mentionné ;
la roue avant (300) mentionnée est installée sur le cadre avant (200) mentionné ;
la roue arrière (400) mentionnée est installée sur le cadre principal (100) mentionné.
